(19) **Europäisches Patentamt**

**European Patent Office**

**Office européen des brevets**

(11) **EP 1 097 855 B1**

(12) **EUROPEAN PATENT SPECIFICATION**

(45) Date of publication and mention
of the grant of the patent:
**18.12.2002 Bulletin 2002/51**

(51) Int Cl.7: **B62D 5/04**

(21) Application number: **00122793.3**

(22) Date of filing: **19.10.2000**

(54) **Steering device for vehicle**

Lenkvorrichtung eines Kraftfahrzeugs

Dispositif de direction pour véhicule

(84) Designated Contracting States:
**DE FR GB IT**

(30) Priority: **02.11.1999 JP 31278999**
**16.12.1999 JP 35745199**

(43) Date of publication of application:
**09.05.2001 Bulletin 2001/19**

(73) Proprietor: **Koyo Seiko Co., Ltd.**
**Osaka 542-8502 (JP)**

(72) Inventors:
• **Nishizaki, Katsutoshi, Koyo Seiko Co., Ltd.**
**Osaka-shi, Osaka 542-8502 (JP)**
• **Nakano, Shiro, Koyo Seiko Co., Ltd.**
**Osaka-shi, Osaka 542-8502 (JP)**
• **Takamatsu, Takanobu, Koyo Seiko Co., Ltd.**
**Osaka-shi, Osaka 542-8502 (JP)**
• **Segawa, Masaya, Koyo Seiko Co., Ltd.**
**Osaka-shi, Osaka 542-8502 (JP)**

(74) Representative: **Hering, Hartmut, Dipl.-Ing.**
**Patentanwälte**
**Berendt, Leyh & Hering**
**Innere Wiener Strasse 20**
**81667 München (DE)**

(56) References cited:
**US-A- 5 251 135**

**Description**

The present invention relates to a steering device for a vehicle to which a so-called 'steer by electrical wire' system is applied as set out in the preamble of claim 1 and disclosed in US-A-5 251 135.

In a steering device for a vehicle incorporating a 'steer by electrical wire' system, as referred to above the movement of a steering actuator is transmitted to the wheels of the vehicle in such a manner that the steering angle thereof changes in accordance with the degree of operation of a rotatable operating member, which is modelled on a steering wheel, without the operating member being coupled mechanically to the wheels of the vehicle.

Conventionally, a target steering angle corresponding to the amount of operation of the operating member is determined, and the steering actuator is controlled in such a manner that steering angle corresponds to the target steering angle. Moreover, a method has also been proposed whereby a target value for the yaw rate corresponding to the change in the behaviour of the vehicle due to the change in steering angle is determined in accordance with the amount of operation of the operating member, a target steering angle is determined in such a manner that the detected actual yaw rate of the vehicle assumes the target yaw rate, and the steering angle actuator is controlled in such a manner that the steering angle corresponds to the target steering angle. Moreover, in order to provide the driver with an artificial impression of a steering sensation similar to that obtained in a normal vehicle in which the steering wheel is mechanically coupled to the wheels, a steering actuator for generating a reactive torque acting on the operating member is provided, whereby a reactive torque corresponding to the amount of operation of the operating member is applied to the operating member.

In the conventional cases where a target steering angle is determined corresponding to the amount of operation of the operating member, it is not possible to respond to the actual behaviour of the vehicle and therefore control which optimizes the vehicle behaviour cannot be performed.

In the conventional cases where the target steering angle is determined in accordance with the actual yaw rate of the vehicle, since virtually no yaw rate is generated at low vehicle speeds, it is not possible to control the steering actuator in an accurate manner. Therefore, a method may be conceived whereby the steering actuator is controlled by determining a target steering angle according to the amount of operation of the operating member, in the low vehicle speed range, whilst the steering actuator is controlled by determining a target steering angle according to the actual yaw rate of the vehicle, in the medium and high vehicle speed range; but at the boundary between the low vehicle speed range and the medium to high vehicle speed range, the amount of control of the steering actuator changes suddenly, and hence the behaviour of the vehicle becomes unstable.

Moreover, in the conventional compositions, the degree of responsiveness of the change in steering angle with respect to the amount of operation of the operating member has been insufficient.

It is an object of the present invention to provide a steering device for a vehicle whereby the aforementioned problems can be resolved.

According to the present invention there is provided a steering device for a vehicle as set out in claim 1.

According to the present invention, the steering actuator is controlled in such a manner that it corresponds to a target steering angle being the sum of a steering angle set value and a steering angle correction value; the steering angle set value corresponds to a target behaviour index value which relates to the amount of operation of the operating member; the steering angle correction value corresponds to the differential between this target behaviour index value and a determined behaviour index value. Since the steering angle set value corresponds to a feed-forward element in the target steering angle and the steering angle correction value corresponds to a feed-back element thereof, integrated control combining feed-forward control and feed-back control is performed. Thereby, it is possible to achieve optimisation of vehicle behaviour, by causing the steering angle of the vehicle to change in accordance with the amount of operation of the operating member, and also by controlling the steering actuator in accordance with change in the behaviour of the vehicle.

The yaw rate or lateral acceleration of the vehicle can be employed as the aforementioned behaviour index value. Moreover, the behaviour index value can be determined as a value D expressed by $D = K1 \cdot Gy + K2 \cdot \gamma \cdot V$, taking the lateral acceleration of the vehicle as Gy, the yaw rate of the vehicle as $\gamma$, the weighted ratio of the lateral acceleration as K1, the weighted ratio of the yaw rate as K2, where $K1 + K2 = 1$, and the speed of the vehicle as V.

It is preferable that the stored relationship between the target behaviour index value and the steering angle set value corresponds to the inverse of the transfer function of the behaviour index value with respect to the steering angle.

Since the relationship between the target behaviour index value and the steering angle set value corresponds to the inverse of the transfer function corresponding to the transient response characteristics of the vehicle behaviour with respect to change in the steering angle, it is thereby possible to improve the responsiveness and stability of the transient response by means of feed-forward control.

Preferably, the stored relationship between the differential of the target behaviour index value and the behaviour index value, and the steering angle correction value, is the inverse of the transfer function of the behaviour index value with respect to the steering angle.

Since the relationship between the steering angle correction value and the differential between the target behaviour index value and the behaviour index value corresponds to the inverse of the transfer function relating to transient response characteristics of the vehicle behaviour with respect to change in the steering angle, the responsiveness and stability of the transient response are thereby improved by feed-back control, and hence the steering feel and the stability of the vehicle behaviour are improved.

Preferably, the aforementioned target behaviour index value is calculated in such a manner that the ratio of the yaw rate or lateral acceleration of the vehicle with respect to the amount of operation of the operating member is uniform, irrespective of the vehicle speed.

In a vehicle wherein the steering wheel and vehicle wheels are mechanically coupled, since the ratio of the steering angle with respect to the amount of operation of the steering wheel is constant, the steady gain of the yaw rate and lateral acceleration with respect to the amount of operation of the steering wheel increase as the vehicle speed increases.

However, according to the embodiment described above, it is possible to improve operability by taking the ratio of the yaw rate or lateral acceleration of the vehicle with respect to the amount of operation of the operating member as a uniform value, irrespective of the vehicle speed.

Preferably, the operating member is rotationally operated; the amount of operation of the operating member is taken as the operating torque imparted to the operating member by the driver of the vehicle; and an operating actuator for generating a reactive torque acting on the operating member is provided; there also being provided: means for detecting the rotational operating angle of the operating member due to the action of the differential between the detecting operating torque and the generated reactive torque; means for calculating a target reactive torque corresponding to the detected rotational operating angle, on the basis of a stored relationship between the rotational operating angle and the target reactive torque; and means for controlling the operating actuator in such a manner that the reactive torque corresponds to the target reactive torque (see claim 5).

If the rotational operating angle of the operating member produced by action of the differential of the operating torque and the reactive torque is used as the amount of operation of the operating member, then it becomes possible to restrict excessive operation of the operating member by means of the reactive torque, but a delay arises from the time at which the driver imparts an operating torque until the rotational operating angle of the operating member is produced. Due to this delay, there is a decline in the response characteristics of the change in steering angle with respect to the operation of the operating member.

However, according to the preferred embodiment described above, the operating torque imparted to the operating member by the driver is employed as the amount of operation of the operating member. It is thereby not only possible to restrict excessive operation of the operating member by means of reactive torque, but it is also possible to reduce the delay from the time that the driver imparts an operating torque to the time that the steering angle changes, and therefore the responsiveness of change in the steering angle with respect to the operations performed by the driver is improved, thereby allowing the attitude of the vehicle to be corrected readily even in the case of sudden steering actions in the high speed range, and hence improving driving stability.

Alternatively, it is preferred that the operating member is rotationally operated; the amount of operation of the operating member is taken as the operating torque imparted to the operating member by the driver of the vehicle; and an operating actuator for generating a reactive torque acting on the operating member is provided; there being further provided: means for detecting the rotational operating angle of the operating member due to the action of the differential between the detecting operating torque and the generated reactive torque; means for calculating a reactive torque set value corresponding to the detected rotational operating angle, on the basis of a stored relationship between the rotational operating angle and the reactive torque set value; means for calculating a behaviour-related rotational operating angle for the operating member corresponding to the determined behaviour index value, on the basis of a stored relationship between the behaviour index value and the behaviour-related rotational operating angle; means for calculating a reactive torque correction value corresponding to the differential between the detected rotational operating angle and the calculated behaviour-related rotational operating angle, on the basis of a stored relationship between this differential and the reactive torque correction value; and means for controlling the operating actuator in such a manner that the reactive torque corresponds to a target reactive torque being the sum of the reactive torque set value and the reactive torque correction value. (see claim 6).

According to this preferred embodiment, the operating torque imparted to the operating member by the driver is employed as the amount of operation of the operating member. It is thereby not only possible to restrict excessive operation of the operating member by means of reactive torque, but it is also possible to reduce the delay from the time that the driver imparts an operating torque to the time that the steering angle changes, and therefore the responsiveness of change in the steering angle with respect to the operations performed by the driver is improved, thereby allowing the attitude of the vehicle to be corrected readily even in the case of sudden steering actions in the high speed range, and hence improving driving stability.

Moreover, a reactive torque correction value is determined according to the differential between a behaviour-related rotational operating angle corresponding to the actual behaviour index value of the vehicle and a detected rotational operating angle, and a target reactive torque being obtained by summing this reactive torque correction value with a reactive torque set value corresponding to the rotational operating angle, and therefore the reactive torque reflects changes in the actual behaviour of the vehicle. Thereby, the attitude of the vehicle can be corrected more readily in response to sudden steering actions, hence improving driving stability, and the driving characteristics of the vehicle are made to correspond to the operating torque imparted by the driver, the vehicle being steered in accordance with this operating torque.

In this case, preferably, the reactive torque correction value is taken as zero, at speeds lower than a previously set vehicle speed.

Thereby, in the low vehicle speed range where no vehicle behaviour index value is generated, the operating actuator can be controlled such that the reactive torque corresponds to the reactive torque set value corresponding to the rotational operating angle. In the medium to high speed range where the behaviour index value of the vehicle becomes larger, the operating actuator can be controlled such that the reactive torque coincides with target reactive torque which is the sum of the reactive torque set value and the reactive torque correction value. Therefore, the control amount of the operating actuator will not change abruptly at the border between the low vehicle speed range and the medium to high speed range, and the vehicle can be operated in accordance with the driver's operating torque by controlling the operating actuator in accordance with the change in behaviour of the vehicle.

When a vehicle speed is lower than a previously set value, it is preferable that the target steering angle corresponding to the detected amount of operation is calculated based on a stored relationship between the amount of operation and the target steering angle, and the steering angle correction value is taken as zero.

Thereby, in the low vehicle speed range where the yaw rate and lateral acceleration are low and virtually no vehicle behaviour index value is generated, and the target steering angle is determined in accordance with the operating torque. In the medium to high speed range, where the behaviour index value of the vehicle becomes larger, the target steering angle is taken as the sum of a steering angle set value corresponding to the target behaviour index value and a steering angle correction value corresponding to the differential between the target behaviour index value and the actual behaviour index value, and the steering actuator is controlled in such a manner that the steering angle coincides with the target steering angle. Therefore, the amount of control applied to the steering actuator at the boundary between the low speed range and the medium to high speed range is equalized, thereby preventing the vehicle behaviour from becoming unstable.

Preferably, the behaviour index value is determined as a value D expressed by $D = K1 \cdot Gy + K2 \cdot \gamma \cdot V$, taking the lateral acceleration of the vehicle as Gy, the yaw rate of the vehicle as $\gamma$, the speed of the vehicle as V, the weighted ratio of the lateral acceleration as K1, and the weighted ratio of the yaw rate as K2, where $K1 + K2 = 1$, the stored relationship between the target behaviour index value and the steering angle set value corresponds to the inverse of the transfer function of the behaviour index value with respect to the steering angle, and the transfer function of the behaviour index value with respect to the steering angle is derived on the basis of a previously determined equation of motion containing the lateral acceleration, yaw rate, steering angle and speed of the vehicle as unknown quantities, at least one of either K1 or K2 being included therein, in such a manner that it corresponds to the transient response of the vehicle behaviour with respect to change in the steering angle (see claim 9).

Since the relationship between the target behaviour index value and the steering angle set value corresponds to the inverse of the transfer function relating to transient response characteristics of the vehicle behaviour with respect to change in steering angle, the responsiveness and stability of the transient response are thereby improved by feed-forward control, and hence the steering feel and the stability of the vehicle behaviour are improved.

Preferably, K1 and K2 are taken as functions of the vehicle speed, in such a manner that the transient response of the vehicle behaviour with respect to change in the steering angle corresponds to a previously determined uniform response, irrespective of the vehicle speed (See claim 10). Thereby, the transient response of the vehicle behaviour with respect to change in the steering angle is made to correspond to a model response, thereby improving said transient response characteristics.

The steering device for a vehicle according to the present invention, provided in a 'steer by wire' system, allows to cause the steering angle of a vehicle to change in accordance with the amount of operation of an operating member, without causing the vehicle behaviour to become unstable in the transition from a low speed range to a medium to high speed range, and hence vehicle behaviour can be optimized, operability can be improved, the attitude of the vehicle can be corrected more readily even in the case of sudden steering actions at high vehicle speeds, thereby improving driving stability, the vehicle can be steered according to operating torque, and moreover, the responsiveness and stability of the transient response of the vehicle behaviour with respect to changes in the steering angle can be improved, thereby improving the steering feel and stability of vehicle behaviour.

BRIEF DESCRIPTION OF THE DRAWINGS

Fig. 1 is a constitutional diagram of a steering device according to embodiments of the present invention;

Fig. 2 is a control block diagram of the steering device according to the first embodiment of the present invention, in a case where the vehicle speed is equal to or greater than a set speed;

Fig. 3 is a control block diagram of the steering device according to the first embodiment of the present invention, in a case where the vehicle speed is less than a set speed;

Fig. 4 illustrates the relationship between vehicle speed and the steady gain of the target steering angle with respect to the rotational operating angle in the steering device according to the first embodiment of the present invention; and the relationship between vehicle speed and the steady gain of the target steering angle with respect to the operating torque in a steering device according to a second embodiment of the present invention;

Fig. 5 is a flowchart illustrating the control procedure of the steering device according to the first embodiment of the present invention;

Fig. 6 is a control block diagram of the steering device according to the second embodiment of the present invention, in a case where the vehicle speed is equal to or greater than a set speed;

Fig. 7 is a control block diagram of the steering device according to the second embodiment of the present invention, in a case where the vehicle speed is less than a set speed;

Fig. 8 is a flowchart illustrating the control procedure of the steering device according to the second embodiment of the present invention;

Fig. 9 is a control block diagram of a steering device according to a third embodiment of the present invention, in a case where the vehicle speed is equal to or greater than a set speed;

Fig. 10 is a flowchart illustrating the control procedure of the steering device according to the third embodiment of the present invention;

Fig. 11 is a control block diagram of a modification example of the first embodiment of the present invention, in a case where the vehicle speed is equal to or greater than a set speed;

Fig. 12 is a control block diagram of a modification example of the second embodiment of the present invention, in a case where the vehicle speed is equal to or greater than a set speed;

Fig. 13 is a control block diagram of a modification example of the third embodiment of the present invention, in a case where the vehicle speed is equal to or greater than a set speed;

Fig. 14 shows the relationship between time and the behaviour index value, illustrating response simulation results for stepped inputs of the steering angle, in cases where K1 is varied in the transfer function of the behaviour index value with respect to the steering angle, in a fourth embodiment of the present invention;

Figs. 15(1) - (4) respectively show the relationship between time and the behaviour index value, illustrating response simulation results for stepped inputs of the steering angle, in cases where the vehicle speed is varied in the transfer function of the behaviour index value with respect to the steering angle, in the fourth embodiment of the present invention;

Figs. 16(1) - (3) respectively show the relationship between time and the behaviour index value, illustrating response simulation results for stepped inputs of the target behaviour index value, in a case where the transfer function of the steering angle set value with respect to the target behaviour index value is set similarly to the first embodiment of the present invention, and the vehicle speed is varied, using the simulation model illustrated in Fig. 17;

Fig. 17 shows a simulation model;

Figs. 18(1) - (4) respectively show the relationships between time and the steering angle, behaviour index value, lateral acceleration and yaw rate, illustrating response simulation results for stepped inputs of the target behaviour index value, in a case where K1 is taken as K1 = 0.5, and the vehicle is varied, using the simulation model illustrated in Fig. 17;

Figs. 19(1) - (4) respectively show the relationships between time and the steering angle, behaviour index value, lateral acceleration and yaw rate, illustrating response simulation results for stepped inputs of the target behaviour index value, in a case where K1 is taken as K1 = 0.25, and the vehicle is varied, using the simulation model illustrated in Fig. 17;

Fig. 20 illustrates the relationship between vehicle speed and K1;

Figs. 21(1) - (4) respectively show the relationships between time and the steering angle, behaviour index value, lateral acceleration and yaw rate, illustrating response simulation results for stepped inputs of the target behaviour index value, in a case where K1 is taken as a function of vehicle speed, and the vehicle is varied, using the simulation model illustrated in Fig. 17;

Figs. 22(1) - (4) respectively show the relationships between time and the steering angle, behaviour index value, lateral acceleration and yaw rate, illustrating response simulation results for stepped inputs of the target behaviour index value, in a case where the transfer function of the steering angle correction value with respect to the differential between the target behaviour index value and the behaviour index value is taken as a proportional control element, of which the proportional gain is taken as 1, and the vehicle is varied, using the simulation model illustrated in Fig. 24;

Figs. 23(1) - (4) respectively show the relationships between time and the steering angle, behaviour index value, lateral acceleration and yaw rate, illustrating response simulation results for stepped inputs of the target behaviour index value, in a case where the transfer function of the steering angle correction value with respect to the differential between the target behaviour index value and the behaviour index value is taken as a proportional control element, of which the proportional gain is taken as 0.05, and the vehicle is varied, using the simulation model illustrated in Fig. 24;

Fig. 24 is a diagram showing a further simulation model; and

Figs. 25(1) - (4) respectively show the relationships between time and the steering angle, behaviour index value, lateral acceleration and yaw rate, illustrating response simulation results for stepped inputs of the target behaviour index value in a case where the vehicle speed is varied in the simulation model illustrated in Fig. 24, according to the fourth embodiment of the present invention.

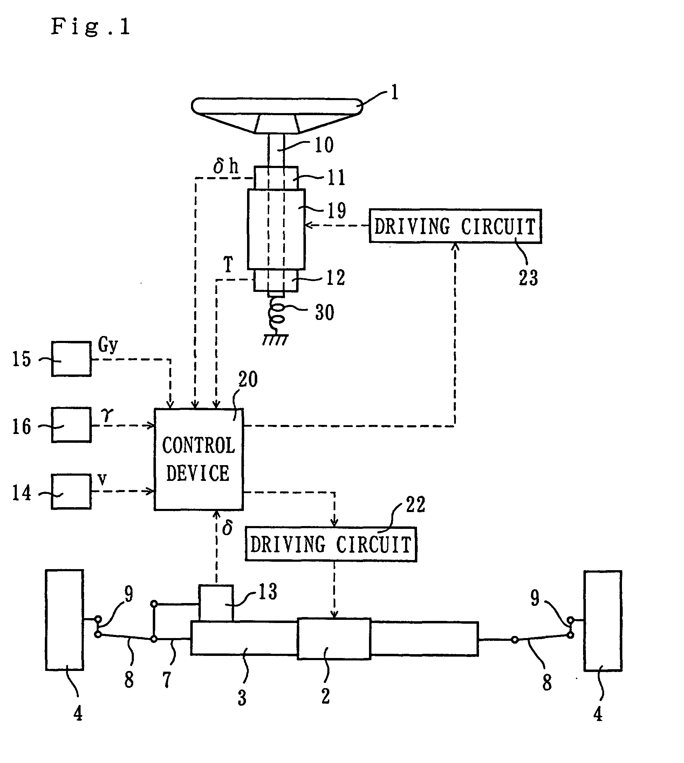

A first embodiment of the present invention is described now with reference to Fig. 1 through Fig. 7.

The steering device for a vehicle illustrated in Fig. 1 comprises: an operating member 1 modelled on a steering wheel; a steering actuator 2 which is driven in accordance with rotational operation of the operating member 1; and a steering gear 3 which transmits the movement of the steering actuator 2 to the front right and left steerable wheels 4 of the vehicle, in such a manner that the steering angle changes in accordance with the movement of the steering actuator 2, without the operating member 1 being coupled mechanically to the vehicle wheels 4.

The steering actuator 2 can be constituted by electric motors, such as commonly known brushless motors, or the like. The steering gear 3 comprises a movement converting mechanism for converting the rotational movement of the output shaft of the steering actuator 2 to linear movement of a steering rod 7. The movement of this steering rod 7 is further transmitted via tie rods 8 and knuckle arms 9 to the vehicle wheels 4, thereby changing the tow angle of the vehicle wheels 4. A commonly used device can be used for the steering gear 3, the constitution of which is not limited, provided that it transmits the movement of the steering actuator 2 to the vehicle wheels 4 in such a manner that the steering angle changes. The wheel alignment is set in such a manner that, in a state where the steering actuator 2 is not being driven, the vehicle wheels 4 are able to return to a forward steering position by means of a self-aligning torque.

The operating member 1 is coupled to a rotating shaft 10 supported rotatably by the main body of the vehicle. An operating actuator 19 for generating a reactive torque acting on the operating member 1 is also provided. This operating actuator 19 can be constituted by an electric motor, such as a brushless motor, or the like, having an output shaft that is integrated with the rotating shaft 10.

An elastic member 30 is provided applying an elastic force to the operating member 1 in a direction causing the member 1 to return to a forward steering position. This elastic member 30 can be constituted by means of a spring applying elastic force to the rotating shaft 10, for example. When the aforementioned operating actuator 19 does not apply any torque to the rotating shaft 10, the operating member 1 is caused to revert to the forward steering position by means of the elastic force of the elastic member 30.

An angle sensor 11 is provided for detecting the angle of rotational operation of the operating member 1 by means of the angle of rotation of the rotating shaft 10.

A torque sensor 12 is provided for detecting the operating torque imparted by the vehicle driver on the operating member 1 by means of the torque transmitted by the rotating shaft 10.

A steering angle sensor 13 for detecting the steering angle of the vehicle is constituted by means of a potentiometer which detects the amount of operation of the steering rod 7 corresponding to the steering angle.

A speed sensor 14 for detecting the vehicle speed is provided.

A lateral acceleration sensor 15 for detecting the lateral acceleration of the vehicle is provided.

A yaw rate sensor 16 for detecting the yaw rate of the vehicle is provided.

The aforementioned angle sensor 11, torque sensor 12, steering angle sensor 13, speed sensor 14, lateral acceleration sensor 15 and yaw rate sensor 16 are connected to a control device 20 constituted by a computer. This control device 20 controls the steering actuator 2 and operating actuator 19 via driving circuits 22, 23.

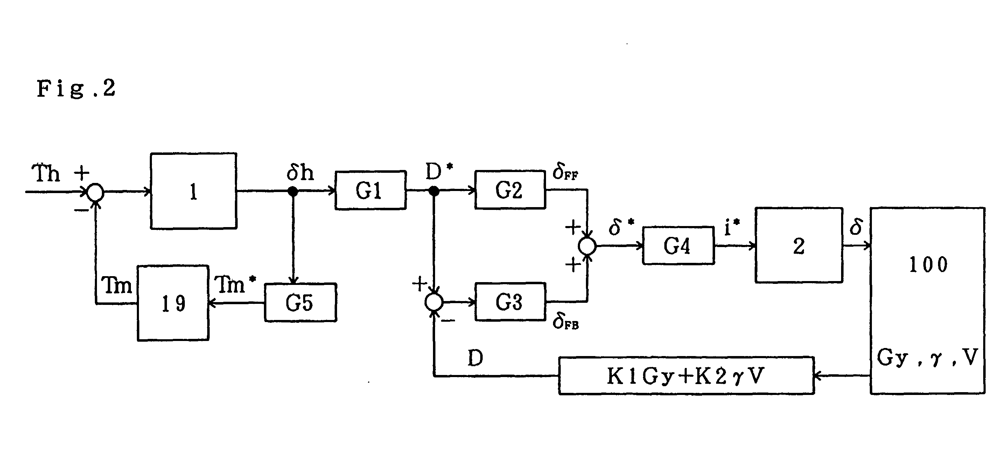

Fig. 2 shows a control block diagram of the control device 20 according to the first embodiment, in a case where the vehicle speed is equal to or greater than a previously determined vehicle speed. In this first embodiment, the angle of rotational operation as detected by the aforementioned angle sensor 11 is taken as the amount of operation of the operating member 1.

Moreover, taking the lateral acceleration of the vehicle as Gy, the yaw rate of the vehicle as $\gamma$, the lateral

acceleration weighted ratio as K1, the yaw rate weighted ratio as K2, and the vehicle speed as V, where K1 + K2 = 1, then the value D expressed by the expression D = K1 · Gy + K2 · $\gamma$ · V represents a behaviour index value corresponding to the change in the behaviour of the vehicle in accordance with the change in steering angle. The lateral acceleration Gy is detected by the aforementioned lateral acceleration sensor 15, the yaw rate $\gamma$ by the yaw rate sensor 16, and the vehicle speed V by the speed sensor 14, respectively, the aforementioned relationship being stored in the control device 20 and the behaviour index value D being calculated by the control device 20 from the respective detected value and the stored expression. The ratios of K1 and K2 should be set in such a manner that the behaviour index value D corresponds to the changes in vehicle behaviour caused by change in the steering angle. For example, these ratios may be set equally to K1 = K2 = 0.5, or they may be changed in accordance with the vehicle speed, or the like, which affects the change in vehicle behaviour caused by change in the steering angle.

In Fig. 2, Th is the detected value for the operating torque from the torque sensor 12; Tm is the reactive torque generated by the operating actuator 19; Tm* is the target reactive torque, $\delta$h is the value of the rotational operating angle of the operating member 1, generated by the differential between the operating torque Th and the reactive torque Tm, as detected by the angle sensor 11; $\delta$ is the value for the steering angle detected by the steering angle sensor 13; $\delta_{FF}$ is the steering angle set value; $\delta_{FB}$ is the steering angle correction value; $\delta$* is the target steering angle; Gy is the value of the lateral acceleration as detected by the lateral acceleration sensor 15; $\gamma$ is the value of the yaw rate as detected by the yaw rate sensor 16; V is the speed value as detected by the speed sensor 14; D is the behaviour index value for the vehicle 100 as derived on the basis of the detected lateral acceleration Gy, yaw rate $\gamma$, and vehicle speed V; D* is the target behaviour index value; i* is the target value for the driving current of the steering actuator 2; G1 is the transfer function of the controller of D* with respect to $\delta$h; G2 is the transfer function of the controller of $\delta_{FF}$ with respect to D*; G3 is the transfer function of the controller of $\delta_{FB}$ with respect to the difference between D* and D; G4 is the transfer function of the controller of i* with respect to $\delta$*; and G5 is the transfer function of the controller of Tm* with respect to $\delta$h.

The control device 20 calculates the target behaviour index value D* corresponding to the rotational operating angle $\delta$h of the operating member 1 as detected by the angle sensor 11, on the basis of the transfer function G1 which represents the relationship between the rotational angle of operation $\delta$h and the target behaviour index value D*. This transfer function G1 is previously determined and stored in the control device 20.

In the present embodiment, the controller of D* with respect to $\delta$h is a proportional control element, the proportional gain of which is proportional to the vehicle speed V. Thereby, taking $K_{D1}$ as the proportional constant, the following relationship is established.

$$D^* = G1 \cdot \delta h = K1 \cdot Gy + K2 \cdot \gamma \cdot V = K_{D1} \cdot V \cdot \delta h$$

Therefore, the target behaviour index value D* is calculated in such a manner that the ratio of the yaw rate $\gamma$ of the vehicle with respect to the rotational operating angle $\delta$h of the operating member 1 is uniform, irrespective of the vehicle speed.

The proportional constant $K_{D1}$ is adjusted in such a manner that optimum control is provided, for example, it is set to 4/3.

Alternatively, by setting the transfer function G1 to a constant, the target behaviour index value D* may be calculated in such a manner that the ratio of the lateral acceleration Gy of the vehicle with respect to the rotational operating angle $\delta$h of the operating member 1 is uniform, irrespective of the vehicle speed.

The control device 20 calculates the steering angle set value $\delta_{FF}$ corresponding to the target behaviour index value D* derived above, on the basis of the transfer function G2 which represents the relationship between the target behaviour index value D* and the steering angle set value $\delta_{FF}$. This transfer function G2 is previously determined and stored in the control device 20.

In the present embodiment, the transfer function G2 is taken as the reciprocal of the steady gain $G_D$ (v) of the lateral acceleration with respect to the steering angle, and hence $\delta_{FF} = D^*/G_D$ (v).

The gain $G_D$ (v) is determined by the following expression, where SF is the stability factor and L is the vehicle wheelbase.

$$G_D (v) = V^2 / \{(1 + SF \cdot V^2)L\}$$

Here, SF and L are intrinsic values of the vehicle, and for example, have values of SF = 0.0011 $s^2/m^2$ and L = 2.512 m.

The control device 20 calculates the differential (D* - D) between the calculated target behaviour index value D* and the behaviour index value D determined on the basis of the detected values for lateral acceleration Gy, yaw

rate $\gamma$, and vehicle speed V, and it further calculates the steering angle correction value $\delta_{FB}$ corresponding to the differential (D* - D) on the basis of the transfer function G3 representing relationship between the differential (D* - D) and the steering angle correction angle $\delta_{FB}$. The transfer function G3 is previously determined and stored in the control device 20.

In the present embodiment, the transfer function G3 is taken as (Kp + Ki/s)/$G_D$ (v), where Kp is the proportional gain, Ki is the integral gain, and s is the Laplace operator, in such a manner that PI (Proportional Integral) control is achieved. Thereby, the following expression is established.

$$\delta_{FB} = (Kp + Ki/s)(D* - D)/ G_D (v)$$

The values of Kp and Ki are adjusted in such a manner that optimum control is performed, being set, for example, to values of Kp = 3 and Ki = 20.

The control device 20 calculates the target steering angle $\delta*$ from the sum of the aforementioned steering angle set value $\delta_{FF}$ and the steering angle correction value $\delta_{FB}$. Therefore, since $\delta* = \delta_{FF} +$ , $\delta_{FF} = D*/G_D$ (v), and D* = $K_{D1} \cdot V \cdot \delta h$, then in a steady state where $\delta_{FB} = 0$, the relationship between the target steering angle $\delta*$ and the rotational operating angle $\delta h$ of the operating member 1 will be given by the following expression.

$$\delta* = \{K_{D1} \cdot V/G_D(v)\}\delta h$$

The control device 20 calculates the target drive current i* for the steering actuator 2 corresponding to the calculated target steering angle $\delta*$, on the basis of the transfer function G4 which represents the relationship between the target steering angle $\delta*$ and the target drive current i*. This transfer function G4 is previously determined and stored in the control device 20. The steering actuator 2 is driven in accordance with the target drive current i*. Thereby, the steering actuator 2 is controlled by the control device 20 in such a manner that the steering angle $\delta$ corresponds to the target steering angle $\delta*$.

The aforementioned transfer function G4 is, for example, taken as G4 = Kb(1+1/(Tb $\cdot$ s)), where Kb is the gain and Tb is a time constant, in such a manner that PI control is achieved, the gain Kb and time constant Tb being adjusted in such a manner that optimum control is provided.

The control device 20 calculates the target reactive torque Tm* corresponding to the rotational operating angle $\delta h$ of the operating member 1 as detected by the angle sensor 11, on the basis of a transfer function G5 which represents the relationship between the rotational operating angle $\delta h$ and the target reactive torque Tm*. This transfer function G5 is previously determined and stored in the control device 20. The operating actuator 19 is controlled by the control device 20 in such a manner that the reactive torque Tm corresponds to the target reactive torque Tm*.

In the present embodiment, the controller of the target reactive torque Tm* corresponding to the rotational operating angle $\delta h$ is a proportional control element, and the proportional gain thereof Kt is constant, irrespective of the vehicle speed.

Moreover, the absolute value of the target reactive torque Tm* may be set in such a manner that it does not exceed a predetermined upper limit, for example, 10 N $\cdot$ m, in such a manner that reactive torque is never applied to an excessive degree.

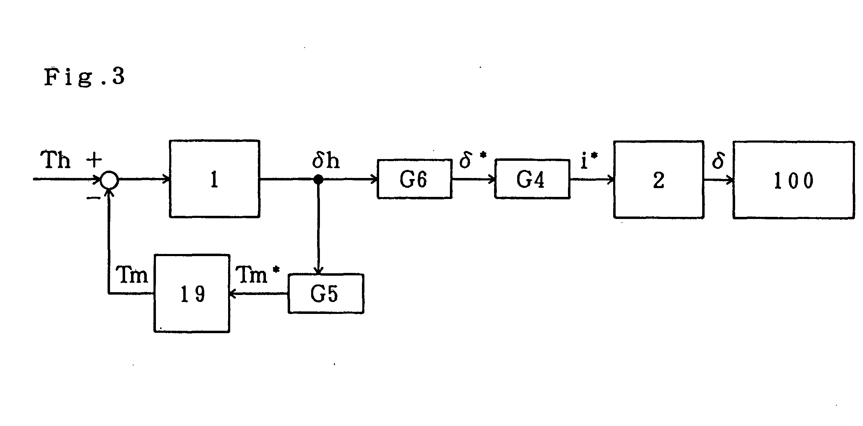

Fig. 3 shows a control block diagram of a control device 20 according to the first embodiment, in a case where the vehicle speed is less than the aforementioned previously set vehicle speed Va. In Fig. 3, G6 is the transfer function of the controller of $\delta*$ corresponding to $\delta h$, and the steering angle correction value $\delta_{FB}$ is set to zero, apart from which, the situation is similar to that in Fig. 2. The previously set vehicle speed Va should be determined in such a manner that at speeds exceeding this vehicle speed Va, the target steering angle $\delta*$ can be set appropriately on the basis of the calculated behaviour index value D, for example, Va is set to 2.78 m/s.

The control device 20 calculates the target steering angle $\delta*$ corresponding to the rotational operating angle $\delta h$ of the operating member 1 as detected by the angle sensor 11, on the basis of a transfer function G6 which represents the relationship between the rotational operating angle $\delta h$ and the target steering angle $\delta*$. This transfer function G6 is previously determined and stored in the control device 20.

In the present embodiment, the controller of $\delta*$ corresponding to $\delta h$ is taken as a proportional control element, and the proportional gain Ka(v) thereof is taken as a function of the vehicle speed V, thereby establishing the following expression

$$\delta* = Ka(v) \cdot \delta h$$

Furthermore, at the previously set vehicle speed Va, the target steering angle δ* determined on the basis of the transfer function G6 and the steering angle set value $\delta_{FF}$ determined on the basis of the aforementioned transfer functions G1, G2 become equal. Therefore, the following expression is established

$$\delta^* = \delta_{FF} = \{K_{D1} \cdot Va/G_D\ (v)\}\delta h = Ka(v) \cdot \delta h$$

The value of Ka(v) is, for example, set to the value at a vehicle speed of V = 0 m/s, and then calculated by interpolating between this value and the value of $\{K_{D1} \cdot Va/G_D\ (v)\}$ at V = 2.78 m/s.

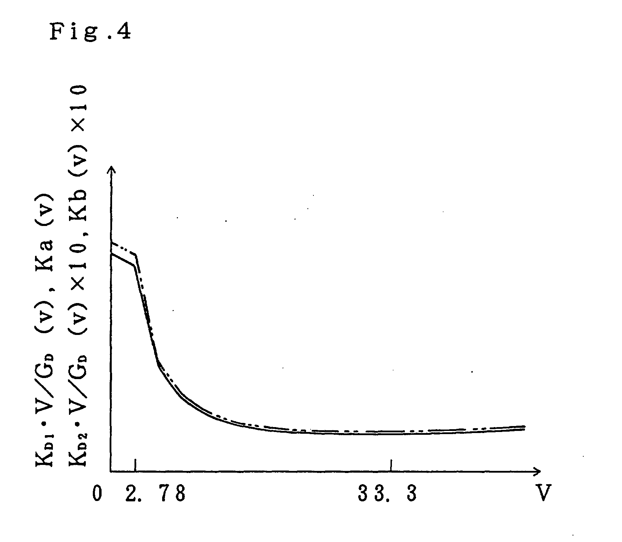

The solid lines in Fig. 4 indicate the relationship between $K_{D1} \cdot V/G_D\ (v)$ and the vehicle speed V when the vehicle speed V is equal to or greater than the aforementioned set vehicle speed Va, and also indicate the relationship between Ka(v) and the vehicle speed V when the vehicle speed is less than the aforementioned set vehicle speed Va. In Fig. 4, $K_{D1}$ = 4/3, SF = 0.0011 $s^2/m^2$, and L = 2.512 m. Moreover, the value of Ka(v) is taken as 1.28 at V = 0 m/s, and is calculated by linear interpolation between this value and the value of $K_{D1} \cdot Va/G_D\ (v)$ at V = 2.78 m/s.

In this case, until the vehicle speed V reaches a prescribed value exceeding Va, namely, Vb = 33.3 m/s, the value of $K_{D1} \cdot V/G_D\ (v)$ decreases as the vehicle speed V increases, but once the prescribed vehicle speed Vb has been exceeded, $K_{D1} \cdot V/G_D\ (v)$ increases as the vehicle speed V increases. Therefore, at or above this prescribed vehicle speed Vb, the value of the steady gain of the target steering angle δ* with respect to the rotational operating angle δh is constant, the value of $K_{D1} \cdot V/G_D\ (v)$ at the prescribed vehicle speed Vb being used as this constant steady gain, and hence the vehicle behaviour is prevented from becoming unstable.

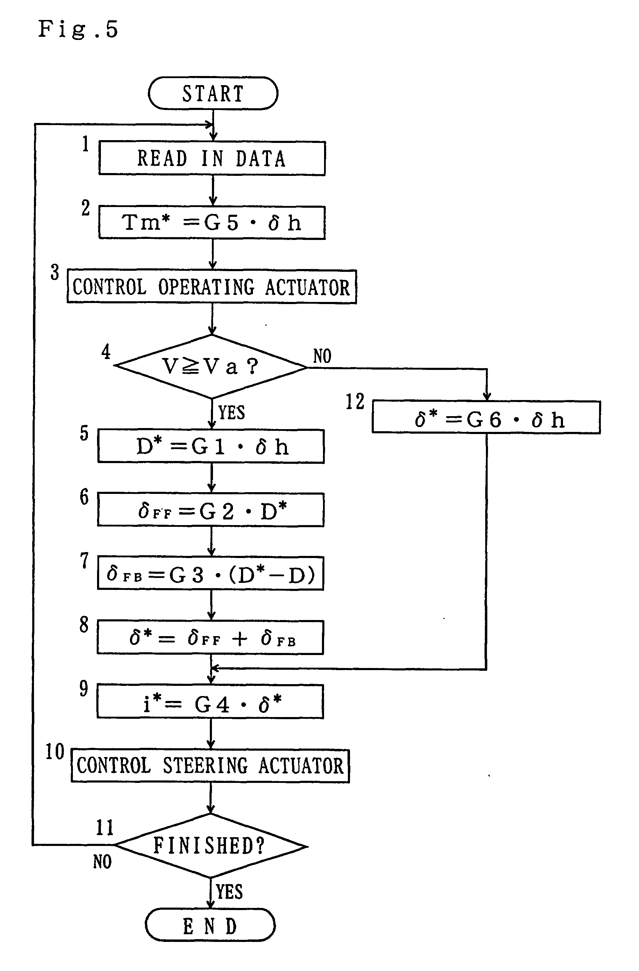

The control procedure implemented by the control device 20 in the first embodiment described above is now explained with reference to the flowchart in Fig. 5. Firstly, the detection data is read in from the respective sensors (step 1).

Thereupon, the target reactive torque Tm* corresponding to the detected rotational operating angle δh is calculated (step 2), and the operating actuator 19 is controlled in such a manner that the reactive torque Tm corresponds to the target reactive torque Tm* (step 3).

Thereupon, it is determined whether or not the vehicle speed V is equal to or greater than a set value Va (step 4).

When the vehicle speed V is equal to or greater than the set value Va at step 4, then a target behaviour index value D* is calculated in accordance with the detected rotational operating angle δh (step 5), a steering angle set angle $\delta_{FF}$ corresponding to the calculated target behaviour index value D* is calculated (step 6), the differential (D* - D) between the calculated target behaviour index value D* and a behaviour index value D determined on the basis of the detected values for the lateral acceleration Gy, yaw rate γ and vehicle speed V is calculated, a steering angle correction value $\delta_{FB}$ corresponding to this differential (D* - D) is calculated (step 7), and a target steering angle δ* is calculated as the sum of the steering angle set value $\delta_{FF}$ and the steering angle correction value $\delta_{FB}$ (step 8).

Thereupon, the target drive current i* for the steering actuator 2 corresponding to the determined target steering angle δ* is calculated (step 9), and by driving the steering actuator 2 in accordance with this target drive current i*, the steering actuator 2 is controlled in such a manner that the steering angle δ corresponds to the target steering angle δ* (step 10).

Thereupon, it is determined whether or not to finish the control procedure, on the basis of whether or not the ignition switch of the vehicle is on, for example (step 11), and if it is not to be finished, the sequence returns to step 1.

When the vehicle speed V is less than the set value Va at step 4, then a target steering angle δ* is calculated in accordance with the detected rotational operating angle δh (step 12), whereupon, at step 9, the target drive current i* of the steering actuator 2 corresponding to the target steering angle δ* is calculated.

By means of the foregoing constitution, the steering actuator 2 is controlled in such a manner that it corresponds to the target steering angle δ* being the sum of the steering angle set value $\delta_{FF}$, which corresponds to the target behaviour index value D* relating to the rotational operating angle δh, and the steering angle correction value $\delta_{FB}$, which corresponds to the difference (D* - D) between the target behaviour index value D* and the determined behaviour index value D. Since the steering angle set value $\delta_{FF}$ corresponds to a feed-forward element and the steering angle correction value $\delta_{FB}$ corresponds to a feed-back element in the target steering angle δ*, integrated control combining feed-forward control and feed-back control is performed. Thereby, the steering angle δ of the vehicle is caused to change in accordance with the amount of operation of the operating member 1, whilst at the same time, the behaviour of the vehicle is optimised by controlling the steering actuator 2 in accordance with change in the behaviour of the vehicle.

Furthermore, operating characteristics can be improved by setting the ratio of the vehicle yaw rate γ with respect to the amount of operation of the operating member 1 to a uniform value, regardless of the vehicle speed, when calculating the target behaviour index value D*.

Moreover, in the low speed range, where the yaw rate γ and lateral acceleration Gy are small and virtually no behaviour index value D is generated for the vehicle, the target steering angle $\delta^*$ is determined in accordance with the rotational operating angle $\delta h$, whereas in the medium and high speed range, where the behaviour index value D of the vehicle becomes larger, the target steering angle $\delta^*$ is derived as the sum of the steering angle set angle $\delta_{FF}$ corresponding to the target behaviour index value D* and the steering angle correction value $\delta_{FB}$ corresponding to the differential (D* - D) between this target behaviour index value D* and the actual behaviour index value D, and the steering actuator 2 is controlled in such a manner that the steering angle matches this target steering angle $\delta^*$. Therefore, since the amount of control applied to the steering actuator 2 is equalized at the boundary between the low speed range and the medium to high speed range (this boundary being at set vehicle speed Va), it is possible to prevent the vehicle behaviour from becoming unstable.

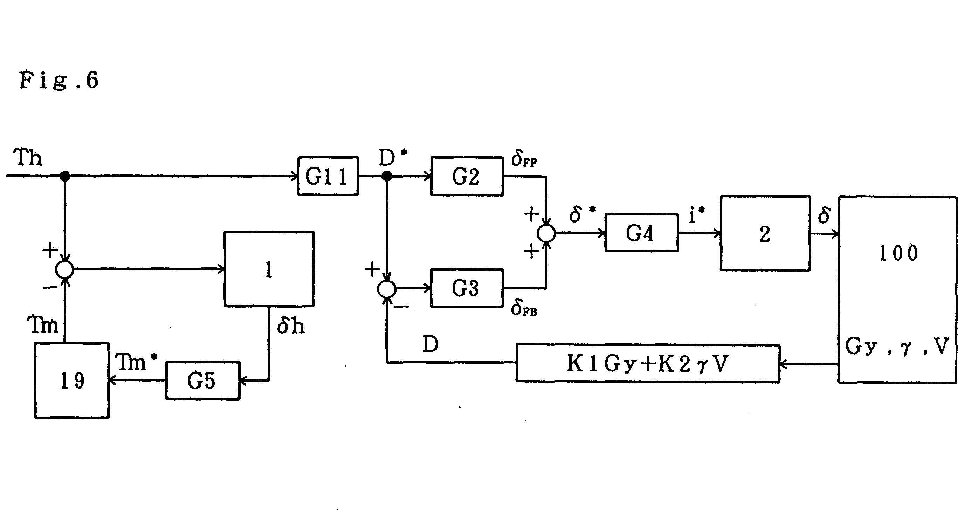

A second embodiment of the present invention is described now with reference to Fig. 6 - Fig. 8.

Fig. 6 shows a control block diagram of a control device 20 according to the second embodiment, in a case where the vehicle speed is equal to or greater than a previously set vehicle speed Va. In this second embodiment, the operating torque Th imparted by the vehicle driver on the operating member 1 is taken as the amount of operation of the operating member 1. In Fig. 6, G11 is a transfer function of the controller of D* with respect to Th, apart from which the situation is the same as that illustrated in Fig. 2.

The control device 20 calculates a target behaviour index value D* corresponding to the operating torque Th of the operating member 1 as detected by the torque sensor 12, on the basis of the transfer function G11 which represents the relationship between the operating torque Th and the target behaviour index value D*. This transfer function G11 is previously determined and stored in the control device 20.

In the present embodiment, the controller of D* with respect to Th is a proportional control element, the proportional gain of which is set as being directly proportional to the vehicle speed V. Thereby, taking the following expression is established, where $K_{D2}$ is a proportional constant.

$$D^* = G11 \cdot Th = K1 \cdot Gy + K2 \cdot \gamma \cdot V = K_{D2} \cdot V \cdot Th$$

Therefore, the target behaviour index value D* is calculated in such a manner that the ratio of the vehicle yaw rate $\gamma$ with respect to the operating torque Th of the operating member 1 is uniform, regardless of the vehicle speed.

The proportional constant $K_{D2}$ is adjusted in such a manner that optimum control is provided, being set, for example, to a value of $\pi/22.5$.

Since $\delta^* = \delta_{FF} + \delta_{FB}$, $\delta_{FF} = D^*/G_D$ (v), and D* = $K_{D2} \cdot V \cdot Th$, then in a steady state when $\delta_{FB} = 0$, the relationship between the target steering angle $\delta^*$ and the operating torque Th of the operating member 1 is given by the following expression.

$$\delta^* = \{K_{D2} \cdot V/G_D \ (v)\}Th$$

Alternatively, the target behaviour index value D* may also be calculated in such a manner that the ratio of the lateral acceleration Gy of the vehicle with respect to the operating torque Th of the operating member 1 is uniform irrespective of the vehicle speed, by setting the transfer function G11 constant.

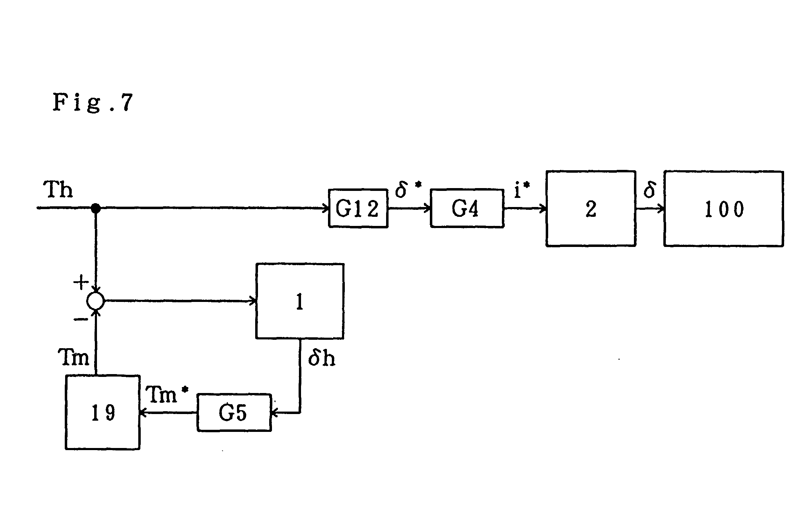

Fig. 7 shows a control block diagram of a control device 20 according to the second embodiment of the invention, in a case where the vehicle speed is less than the aforementioned predetermined vehicle speed Va. In Fig. 7, G12 is the transfer function of the controller of $\delta^*$ with respect to Th, and the steering angle correction angle $\delta_{FB}$ is taken as 0, apart from which the situation is similar to that depicted in Fig. 6.

The control device 20 calculates a target steering angle $\delta^*$ corresponding to the operating torque Th of the operating member 1 as detected by the torque sensor 12, on the basis of the transfer function G12 which represents the relationship between the operating torque Th and the target steering angle $\delta^*$. This transfer function G12 is previously determined and stored in the control device 20.

In the present embodiment, the controller of $\delta^*$ with respect to Th is a proportional control element, of which the proportional gain Kb(v) is taken as a function of the vehicle speed V, thereby establishing the following expression

$$\delta^* = Kb(v) \cdot Th$$

Furthermore, at the previously set vehicle speed Va, the target steering angle $\delta^*$ determined on the basis of the transfer function G12 and the steering angle set value $\delta_{FF}$ determined on the basis of the aforementioned transfer functions G11, G2 become equal. Therefore, the following expression is established

$$\delta^* = \delta_{FF} = \{K_{D2} \cdot Va/G_D \ (v)\}Th = Kb(v) \cdot Th$$

The value of Kb(v) is, for example, set to the value at a vehicle speed of V = 0 m/s, and then derived by interpolating between this value and the value of $\{K_{D2} \cdot Va/G_D \ (v)\}$ at V = 2.78 m/s.

The double-dotted lines in Fig. 4 indicate the indicate the relationship between $K_{D2} \cdot V/G_D$ (v)×10 and the vehicle speed V, when the vehicle speed V is equal to or greater than the aforementioned set vehicle speed Va, and the relationship between Kb(v)×10 and the vehicle speed V when the vehicle speed is less than the aforementioned set vehicle speed Va. Here, $K_{D2} = \pi/22.5$, SF = 0.0011 $s^2/m^2$, and L = 2.512 m. Moreover, the value of Kb(v) is taken as 0.134 at V = 0 m/s, and is derived by linear interpolation between this value and the value of $K_{D2} \cdot Va/G_D$ (v) at V = 2.78 m/s.

In this case, until the vehicle speed V reaches a prescribed value exceeding Vb, namely, Vb = 33.3 m/s, the value of $K_{D2} \cdot Va/G_D$ (v) decreases as the vehicle speed V increases, but once the prescribed vehicle speed Vb has been exceeded, $K_{D2} \cdot Va/G_D$ (v) increases as the vehicle speed V increases. Therefore, at or above this prescribed vehicle speed Vb, the value of the steady gain of the target steering angle $\delta^*$ with respect to the rotational operating angle δh is constant, the value of $K_{D2} \cdot V/G_D$ (v) at the prescribed vehicle speed Vb being used as this constant steady gain, and hence the vehicle behaviour is prevented from becoming unstable.

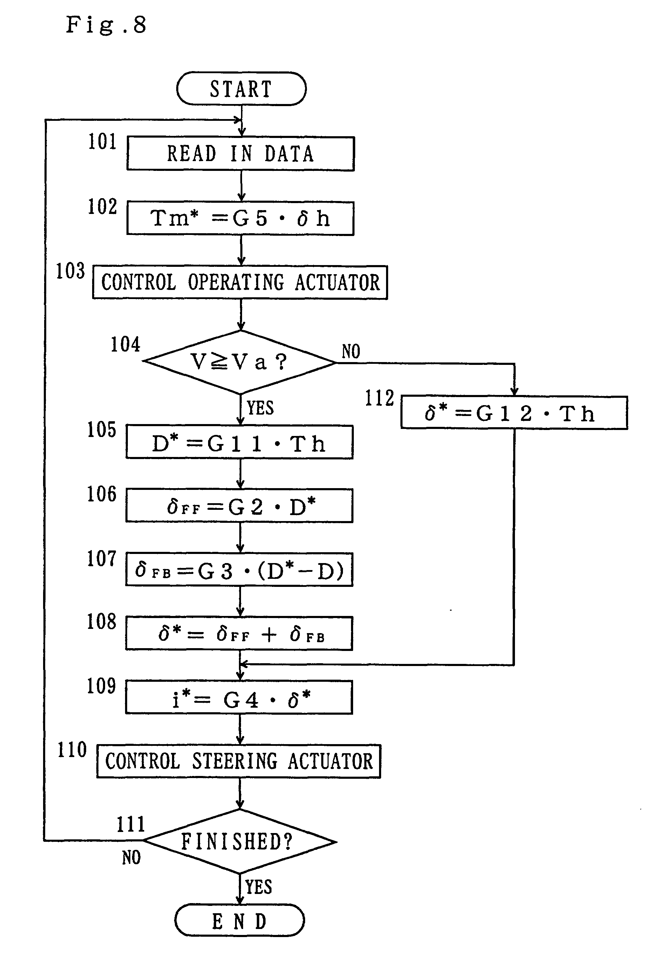

The control procedure implemented by the control device 20 according to the second embodiment described above is now explained with reference to the flowchart in Fig. 8. Firstly, the detection data is read in from the respective sensors (step 101).

Thereupon, the target reactive torque Tm* corresponding to the detected rotational operating angle δh is calculated (step 102), and the operating actuator 19 is controlled in such a manner that the reactive torque Tm corresponds to the target reactive torque Tm* (step 103).

Thereupon, it is determined whether or not the vehicle speed V is equal to or greater than a set value Va (step 104).

When the vehicle speed V is equal to or greater than the set value Va at step 104, then a target behaviour index value D* is calculated in accordance with the detected operating torque Th (step 105), a steering angle set value $\delta_{FF}$ corresponding to the calculated target behaviour index value D* is calculated (step 106), the differential (D* - D) between the calculated target behaviour index value D* and a behaviour index value D determined on the basis of the detected values for the lateral acceleration Gy, yaw rate γ and vehicle speed V is calculated, a steering angle correction value $\delta_{FB}$ corresponding to this differential (D* - D) is calculated (step 107), and a target steering angle $\delta^*$ is calculated as the sum of the steering angle set value $\delta_{FF}$ and the steering angle correction value $\delta_{FF}$ (step 108).

Thereupon, a target drive current i* for the steering actuator 2 corresponding to the calculated target steering angle $\delta^*$ is calculated (step 109), and by driving the steering actuator 2 in accordance with this target drive current i*, the steering actuator 2 is controlled in such a manner that the steering angle δ corresponds to the target steering angle $\delta^*$ (step 110).

Thereupon, it is determined whether or not to finish the control procedure, on the basis of whether or not the ignition switch of the vehicle is on, for example (step 111), and if it is not to be finished, the sequence returns to step 101.

When the vehicle speed V is less than the set value Va at step 104, then a target steering angle $\delta^*$ is calculated in accordance with the detected operating torque Th (step 112), whereupon, at step 109, the target drive current i* of the steering actuator 2 corresponding to the target steering angle $\delta^*$ is calculated.

Apart for the foregoing, this embodiment is similar to the first embodiment.

By means of the second embodiment described above, similar beneficial effects as those in the first embodiment can be obtained. Moreover, the operating torque imparted by the driver on the operating member 1 is employed as the amount of operation of the operating member 1. Thereby, not only is it possible to restrict excessive operation of the operating member 1 by means of the reactive torque, but it is also possible to reduce the delay from the time that the driver imparts an operating torque to the time that the steering angle changes, and therefore the responsiveness of change in the steering angle with respect to the operations performed by the driver is improved, thereby allowing the attitude of the vehicle to be corrected readily even in the case of sudden steering actions in the high speed range, and hence improving driving stability.

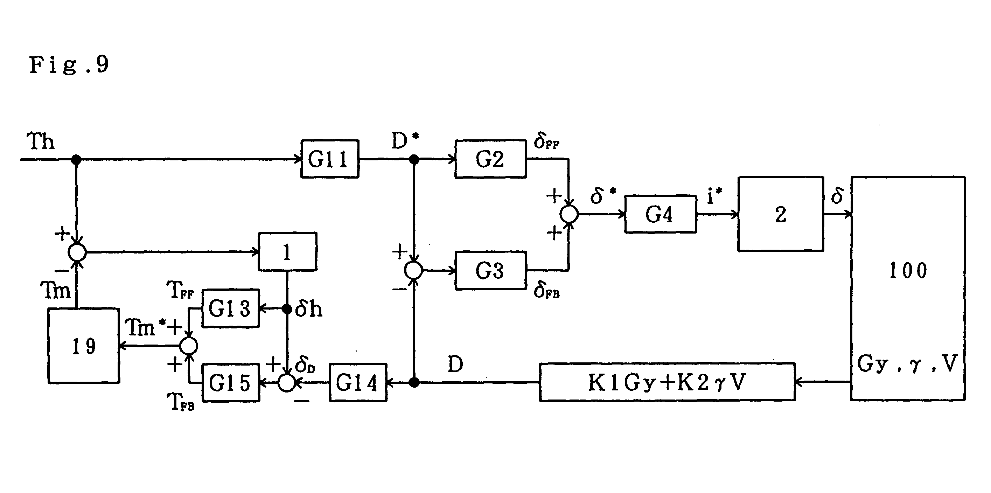

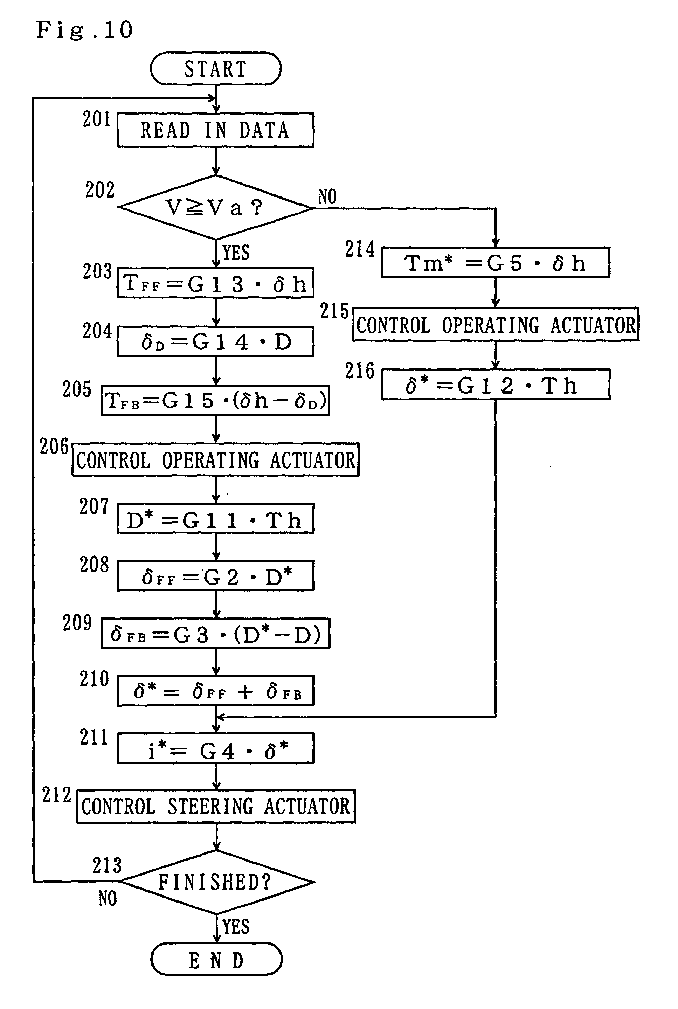

The third embodiment of the present invention is now described with reference to Fig. 9 and Fig. 10.

Fig. 9 is a control block diagram of a control device 20 according to the third embodiment of the invention, in a case where the vehicle speed is equal to or greater than a previously set vehicle speed Va. In this third embodiment, similarly to the second embodiment, the operating torque Th imparted by the vehicle driver on the operating member 1 is taken as the amount of operation of the operating member 1.

Moreover, in Fig. 9, $T_{FF}$ is a reactive torque set value, $\delta_D$ is a behaviour-related rotational operating angle, $T_{FB}$ is a reactive torque correction value, G13 is the transfer function of the controller of $T_{FF}$ with respect to δh, G14 is the transfer function of the controller of $\delta_D$ with respect to D, and G15 is the transfer function of the controller of $T_{FB}$

with respect to the differential between δh and $\delta_D$. Apart from the foregoing, the situation is similar to that depicted in Fig. 6.

The control device 20 calculates a reactive torque set value $T_{FF}$ corresponding to the rotational operating angle δh of the operating member 1 as detected by the angle sensor 11, on the basis of the transfer function G13 which represents the relationship between the rotational operating angle δh and the reactive torque set value $T_{FF}$. The transfer function G13 is previously determined and stored in the control device 20.

In the present embodiment, the controller of the reactive torque set value $T_{FF}$ with respect to the rotational operating angle δh is taken as a proportional control element, of which the proportional gain Kt is taken as constant, irrespective of the vehicle speed. Hence, $T_{FF} = Kt \cdot \delta h$.

It can also be devised that the absolute value of the reactive torque set value $T_{FF}$ is not permitted to exceed a previously determined upper limit, for example, $10\ N \cdot m$, in such a manner that reactive torque is never applied to an excessive degree.

The control device 20 calculates a behaviour-related rotational operating angle $\delta_D$, which corresponds to a behaviour index value D derived from the detected values for lateral acceleration Gy, yaw rate γ, and vehicle speed V, on the basis of the transfer function G14 which represents the stored relationship between the behaviour index value D and the behaviour-related rotational operating angle $\delta_D$. This transfer function G14 is previously determined and stored in the control device 20.

In the present embodiment, the controller of the behaviour-related rotational operating angle $\delta_D$ is taken as a proportional control element, of which the proportional gain is set as a factor Kδ (v) of the vehicle speed V. Hence, $\delta_D = K\delta\ (v) \cdot D$.

In a steady state, since D* = D, Th = Tm = $T_{FF}$, and D* = $K_{D2} \cdot V \cdot Th$, and $T_{FF} = Kt \cdot \delta h$, the following expression is established.

$$D = K_{D2} \cdot V \cdot Kt \cdot \delta h$$

Therefore, in order for the rotational operating angle δh of the operating member 1 to correspond to the behaviour of the vehicle, in other words, in order that $\delta_D = \delta h$, the following expression should be established.

$$\delta h = \delta_D = D/K_{D2} \cdot V \cdot Kt = K\delta\ (v) \cdot D$$

Therefore, Kδ (v) = $1/K_{D2} \cdot Kt \cdot V$, and since $K_{D2}$ and Kt are proportional constants, Kδ (v) is an element directly proportional to the vehicle speed V, for instance, Kδ (v) = 3/4V.

The control device 20 calculates the differential (δh - $\delta_D$) between the detected rotational operating angle δh and the calculated behaviour-related rotational operating angle $\delta_D$, and further calculates a reactive torque correction value $T_{FB}$ corresponding to this differential (δh - $\delta_D$), on the basis of the transfer function G15 which represents the relationship between the aforementioned differential (δh - $\delta_D$) and the reactive torque correction value $T_{FB}$. This transfer function G15 is previously determined and stored in the control device 20.

In the present embodiment, the transfer function G15 is set as (Ktp + Kti/s), where Ktp is the proportional gain and Kti is the integral gain, in such a manner that PI control is achieved. The values of Ktp and Kti are adjusted in such a manner that optimum control is provided, for example, being set respectively to Ktp = 1 and Kti = 0.0005.

The control device 20 calculates a target reactive torque Tm* as the sum of the reactive torque set value $T_{FF}$ and the reactive torque correction value $T_{FB}$, and the operating actuator 19 is controlled by the control device 20 in such a manner that the reactive torque Tm corresponds to the target reactive torque Tm*.

In this third embodiment, when the vehicle speed is less than a previously set vehicle speed, then the reactive torque correction value $T_{FB}$ is taken as zero, and the control block diagram relating to this embodiment is similar to that of the second embodiment illustrated in Fig. 7.

The control procedure implemented by the control device 20 according to the third embodiment described above is now explained with reference to the flowchart in Fig. 10. Firstly, the detection data is read in from the respective sensors (step 201).

Thereupon, it is determined whether or not the vehicle speed V is equal to or greater than a set value Va (step 202).

When the vehicle speed V is equal to or greater than the set value Va at step 202, then a reactive torque set value $T_{FF}$ is calculated in accordance with the detected rotational operating angle δh (step 203), a behaviour-related rotational operating angle $\delta_D$ corresponding to a behaviour index value D derived from the detected values for lateral acceleration Gy, yaw rate γ, and vehicle speed V is calculated (step 204), a reactive torque correction value $T_{FB}$ corresponding to the differential (δh - $\delta_D$) between the rotational operating angle δh and the behaviour-related rotational

operating angle $\delta_D$ is calculated (step 205), and the operating actuator 19 is controlled in such a manner that the reactive torque Tm corresponds to a target reactive torque Tm* being the sum of the reactive torque set value $T_{FF}$ and the reactive torque correction value $T_{FB}$ (step 206).

Next, a target behaviour index value D* is calculated corresponding to the detected operating torque Th (step 207), a steering angle set value $\delta_{FF}$ corresponding to the calculated target behaviour index value D* is calculated (step 208), the differential (D* - D) between the calculated target behaviour index value D* and a behaviour index value D determined from the detected values for the lateral acceleration Gy, yaw rate $\gamma$ and vehicle speed V is calculated, a steering angle correction value $\delta_{FB}$ corresponding to this differential (D* - D) is calculated (step 209), and a target steering angle $\delta$* is calculated as the sum of the steering angle set value $\delta_{FF}$ and the steering angle correction value $\delta_{FB}$ (step 210).

Thereupon, a target drive current i* for the steering actuator 2 corresponding to the calculated target steering angle $\delta$* is calculated (step 211), and by driving the steering actuator 2 in accordance with this target drive current i*, the steering actuator 2 is controlled in such a manner that the steering angle $\delta$ corresponds to the target steering angle $\delta$* (step 212).

Thereupon, it is determined whether or not to finish the control procedure, on the basis of whether or not the ignition switch of the vehicle is on, for example (step 213), and if it is not to be finished, the sequence returns to step 201.

When the vehicle speed V is less than the set value Va at step 202, then a target reactive torque Tm* is calculated in accordance with the detected rotational operating angle $\delta$h (step 214), the operating actuator 19 is controlled in such a manner that the reactive torque Tm corresponds to the target reactive torque Tm* (step 215), and a target steering angle $\delta$* is calculated in accordance with the detected operating torque Th (step 216), whereupon a target drive current i* for the steering actuator 2 corresponding to the target steering angle $\delta$* is calculated at step 211.

Apart from the foregoing, the third embodiment is similar to the second embodiment.

According to the third embodiment described above, similar beneficial effects as those in the second embodiment can be obtained. Moreover, a reactive torque correction value $T_{FB}$ is determined in accordance with the differential between a behaviour-related rotational operating angle $\delta_D$ corresponding to the actual behaviour index value D of the vehicle and the detected rotational operating angle $\delta$h, and then the target reactive torque Tm* is taken as the sum of this reactive torque correction value $T_{FB}$ and the reactive torque set value $T_{FF}$ corresponding to the rotational operating angle $\delta$h, so that the reactive torque Tm reflects changes in the actual behaviour of the vehicle. This allows the attitude of the vehicle to be corrected readily, even in the case of sudden steering actions in the high speed range, and hence improves driving stability, the driving characteristics of the vehicle being made to correspond to the operating torque imparted by the driver and the vehicle being steered in accordance with this operating torque.

Moreover, in the low speed range, where virtually no vehicle behaviour index value D is generated, the operating actuator 19 can be controlled in such a manner that the reactive torque coincides with the reactive torque set value $T_{FF}$ corresponding to the rotational operating angle $\delta$h. In the medium to high speed range, where the vehicle behaviour index value D becomes larger, the operating actuator 19 can be controlled in such a manner that the reactive torque Tm coincides with the target reactive torque Tm* being the sum of the reactive torque set value $T_{FF}$ and the reactive torque correction value $T_{FB}$. Consequently, there is no sudden change in the amount of control applied to the operating actuator 19 at the boundary between the low speed range and the medium to high speed range, and it is possible to steer the vehicle according to the operating torque Th imparted by the driver by controlling the operating actuator 19 in accordance with changes in the behaviour of the vehicle.

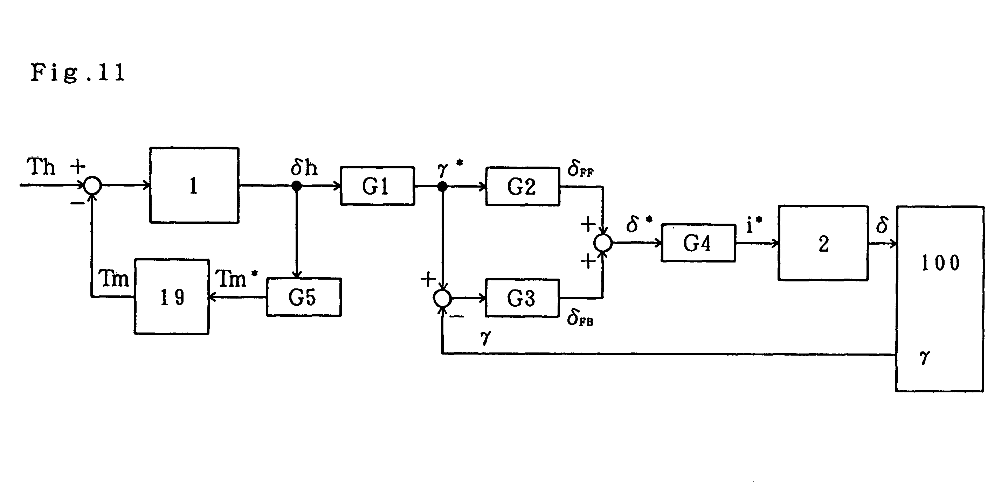

Fig. 11 is a control block diagram of a control device 20 according to a modification example of the first embodiment.

In this modification example, the weighted ratio for lateral acceleration in the first embodiment is set to zero, and the yaw rate weighted ratio is set to 1, and hence the yaw rate $\gamma$ is used as a behaviour index value in place of D. By taking the proportional gain of the controller of $\gamma$* with respect to $\delta$h, forming a proportional control element, as a constant K$\gamma$a, having a value of 4/3, for example, the expression $\gamma$* = G1 · $\delta$h = K$\gamma$a · $\delta$h is established, apart from which this example is similar to the first embodiment.

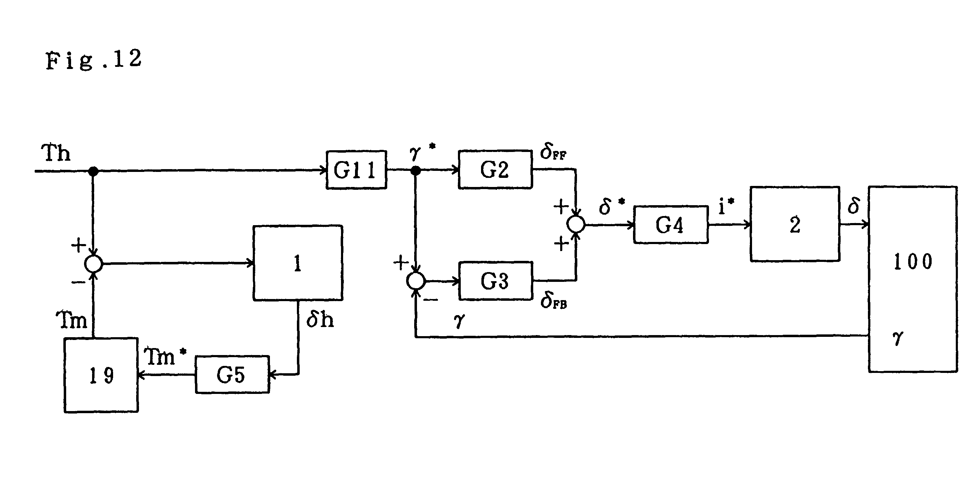

Fig. 12 shows a control block diagram of a control device 20 according to a modification example of the second embodiment. In this modification example, the lateral acceleration weighted ratio in the second embodiment is set to zero, and the yaw rate weighted ratio is set to 1, and hence the yaw rate $\gamma$ is used as a behaviour index value in place of D. By taking the proportional gain of the controller of $\gamma$* with respect to Th, forming a proportional control element, as a constant K$\gamma$b, having a value of $\pi$/22.5, for example, the expression $\gamma$* = G11 · Th = K$\gamma$b · Th is established, apart from which this example is similar to the second embodiment.

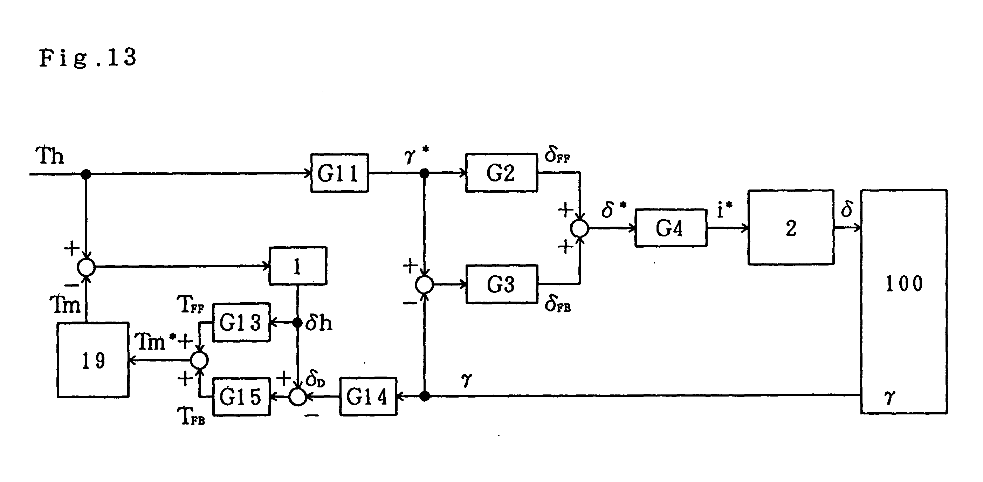

Fig. 13 shows a control block diagram of a control device 20 according to a modification example of the third embodiment. In this modification example, the lateral acceleration weighted ratio in the third embodiment is set to zero, and the yaw rate weighted ratio is set to 1, and hence the yaw rate $\gamma$ is used as a behaviour index value in place of D. By taking the proportional gain of the controller of $\gamma$* with respect to Th, forming a proportional control element, as a constant K$\gamma$b, having a value of $\pi$/22.5, for example, the expression $\gamma$* = G11 · Th = K$\gamma$b · Th is established, and by taking the proportional gain of the controller of $\delta_D$ with respect to $\gamma$, forming a proportional control element, as a constant $K\delta$, having a value of 3/4, for example, the expression part $\delta_D = K\delta \cdot \gamma$ is established, apart from which this example is similar to the third embodiment.

The control block diagrams relating to the respective modification examples described above illustrate cases where the vehicle speed is equal to or greater than a set value, and in cases where the vehicle speed is less than the set value, the behaviour index value D in the control block diagram relating to the corresponding embodiment is substituted for $\gamma$.

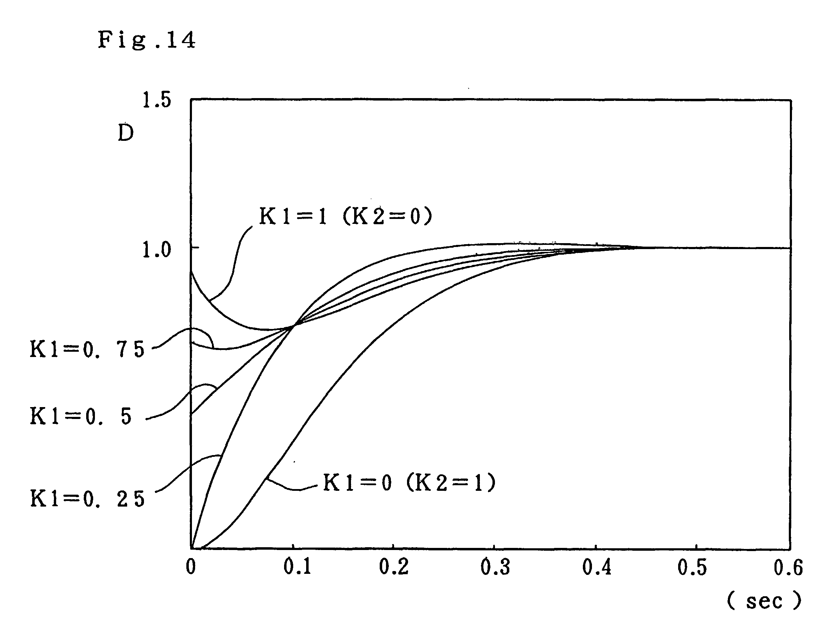

A fourth embodiment of the present invention is described here with reference to Fig. 14 to Fig. 25. Items which are similar to the first to third embodiments described above are labelled with the same reference symbols, and only the points of difference is explained here.

In the respective embodiments described above, the transfer function G2 corresponding to the relationship between the target behaviour index value D* and the steering angle set value $\delta_{FF}$ is taken as the reciprocal of the steady gain of lateral acceleration with respect to the steering angle. Moreover, the transfer function G3 representing the relationship between the steering angle correction value $\delta_{FB}$ and the differential (D* - D) of the target behaviour index value D* and the behaviour index value D is determined in such a manner that proportional integrated (PI) control is achieved. In other words, the steering angle set value $\delta_{FF}$ and the steering angle correction value $\delta_{FB}$ are set without consideration of the transient response characteristics of the vehicle behaviour with respect to changes in the steering angle. Consequently, cases may arise where it is not possible to achieve sufficient steering feel or improvement in the stability of the vehicle behaviour, in the period after a change in the steering angle until the vehicle behaviour assumes a steady state.

Therefore, in this fourth embodiment, the transfer function G2, which corresponds to the relationship between the target behaviour index value D* and the steering angle set value $\delta_{FF}$, and the transfer function G3, which corresponds to the relationship between the steering angle correction value $\delta_{FB}$ and the differential (D* - D) of the target behaviour index value D* and the behaviour index value D are set with consideration of the aforementioned transient response characteristics, apart from the foregoing, the fourth embodiment is similar to the first to third embodiment.

Firstly, a transfer function $G_D$ (s) for the behaviour index value D with respect to the steering angle $\delta$ is determined, and the inverse of the derived transfer function, namely, $1/G_D$ (s) is set such that it corresponds to the transfer function G2 of $\delta_{FF}$ with respect to D*. The transfer function $G_D$ (s) is derived on the basis of a predetermined equation of motion which comprises the lateral acceleration Gy, yaw rate $\gamma$, steering angle $\delta$ and speed V of the vehicle as unknown quantities, in such a manner that it includes at least one of either K1 or K2 being included therein and corresponds to the transient response of the vehicle behaviour with respect to change in the steering angle. By way of an example, using a two-wheel model, wherein the four wheels, front, back, left and right of a vehicle are regarded as two wheels, front and back in the centre of the vehicle body, the following equations of motion are established for vehicle movement in the linear tyre region, wherein the lateral slip angle of the tyres is directly proportional to the cornering force. Naturally, the equations of motion are not limited to these.

$$V \cdot \gamma(s) = \delta(s) \cdot V \cdot G_r \cdot (1 + T_r s)/(1 + 2\zeta s/\omega_n + s^2/\omega_n^2)$$

$$Gy(s) = \delta(s) \cdot V \cdot G_r \cdot (1 + T_{y1}s + T_{y2}s^2)/(1 + 2\zeta s / \omega_n + s^2/\omega_n^2)$$

Moreover, since D = K1 $\cdot$ Gy+K2 $\cdot$ $\gamma$ $\cdot$ V, the transfer function $G_D$ (s) is given by the following expression.

$$G_D(s) = D(s) / \delta(s) = V \cdot G_r \cdot \{1 + (K1 \cdot T_{y1} + K2 \cdot T_r)s + K1 \cdot T_{y2} s^2\} /$$

$$(1 + 2\zeta s / \omega_n + s^2/\omega_n^2)$$

Here, $G_D$ (s) includes K1 and K2, but since K1 + K2 = 1, it is possible to derive an expression containing one of these only.

$T_r$, $T_{y1}$ and $T_{y2}$ are time constants, and taking $L_f$ as the distance between the front wheel axis and the centre of gravity of the vehicle, $L_r$ as the distance between the rear wheel axis and the centre of gravity of the vehicle, $I_z$ as the inertia moment of the vehicle, and $K_r$ as the cornering power of the rear wheel, the following expressions can be derived.

$$T_r = m \cdot L_f \cdot V/2L \cdot K_r$$

$$T_{y1} = L_r / V$$

$$T_{y2} = I_z / 2L \cdot K_r$$

$G_r$ is determined as the steady gain of the yaw rate with respect to the steering angle, from the following expression.

$$G_r = V/\{(1 + SF \cdot V^2) \cdot L\}$$

Moreover, $\omega_n$ is the natural angular frequency of the vehicle, $\zeta$ is the attenuation ratio, $K_f$ is the cornering power of the front wheel, and m is the mass of the vehicle, and hence the following expressions are derived.

$$\omega_n = (2L/V) \cdot \{K_f \cdot K_r \cdot (1 + SF \cdot V^2)/(m \cdot I_z)\}^{1/2}$$

$$\zeta = \{m \cdot (L_f^2 \cdot K_f + L_r^2 \cdot K_r) + I_z \cdot (K_f + K_r)/2L/\{m \cdot I_z \cdot K_f \cdot K_r \cdot$$

$$(1 + SF \cdot V^2)\}^{1/2}$$

Therefore, the transfer function G2 is described by the following equation.

$$G2 = 1/G_D(s) = (1/VG_r) \cdot (1 + 2\zeta s/\omega_n + s^2/\omega_n^2) / \{1 + (K1 \cdot T_{y1} + K2 \cdot$$

$$T_r)s + K1 \cdot T_{y2} s^2\}$$

According to the equation for the transfer function $G_D$ (s), since K1 + K2 = 1, the value of K1 does not influence the steady gain, and therefore the yaw rate can be maintained at a uniform value with respect to the angle of the steering wheel, regardless of the vehicle speed.
Fig. 14 shows the relationship between the behaviour index value D and time, illustrating response simulation results for stepped inputs of $\delta$ in the aforementioned transfer function $G_D$ (s). Here, the vehicle speed V is set to a uniform value (16.7 m/s) and K1 is changed from 0 to 1 in steps of 0.25. Moreover, the following values are used : m = 1500 kg, $I_z$ = 1950 kg $\cdot$ m2, $K_f$ = 54430 N/rad, $K_r$ = 64770 N/rad, L = 2.515 m, $L_f$ = 1.023 m, $L_r$ = 1.492 m, and SF = 0.0014 s2/m2.

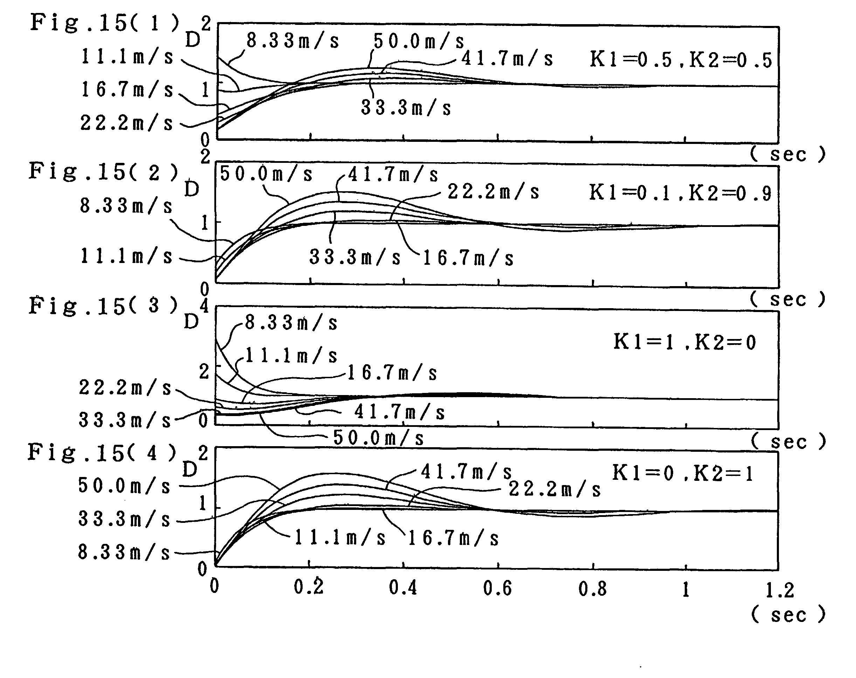

Figs. 15(1) through (4) show relationships between time and behaviour index value D, illustrating response simulation results for stepped inputs of $\delta$ in the aforementioned transfer function $G_D$ (s). In these diagrams, K1 is taken as a constant value, and the vehicle speed V is taken as 8.33 m/s, 11.1 m/s, 16.7 m/s, 22.2 m/s, 33.3 m/s, 41.7 m/s and 50.0 m/s. The diagrams show respective response results for D = Gy, K1 being taken as K1 = 0.5 in Fig. 15(1), as K1 = 0.1 in Fig. 15(2), and K1 = 1 in Fig. 15(3). In Fig. 15(4), the response results for D = V $\cdot$ $\gamma$ when K1 = 0 are shown. Apart from the foregoing, the diagrams are similar to the response simulations illustrated in Fig. 14.
From Fig. 14 and Figs. 15(1) through (4), it is seen that the temporal change in the behaviour index value D with respect to change in the steering angle $\delta$ varies greatly depending on the values of K1 and K2. More specifically, in the initial response period, Gy is the governing factor relating to the transient response characteristics of the vehicle behaviour with respect to change in the steering angle, and thereafter, $\gamma$ becomes the governing factor, and the lower the value of K1, the greater the restriction of the initial response in the low speed range, but the more emphasized the overshoot in the high speed range. Therefore, in the first to third embodiments described above, by setting K1 to an appropriately small value and performing compensation based on feed-back control, it is possible to improve stability in the high speed range whilst maintaining swift response in the low speed range, in relation to the transient response of the lateral acceleration and yaw rate with respect to change in the steering angle. As opposed to improving responsiveness in feed-back control in this manner, in the fourth embodiment, improvements in the responsiveness of feed-forward control are devised, and also by combining this with improvement in the responsiveness of feed-back control, it is sought to improve responsiveness further by utilizing the advantages of integrated control involving feed-forward control and feed-back control, and moreover, further improvement in responsiveness is sought by optimizing the values of K1 and K2.

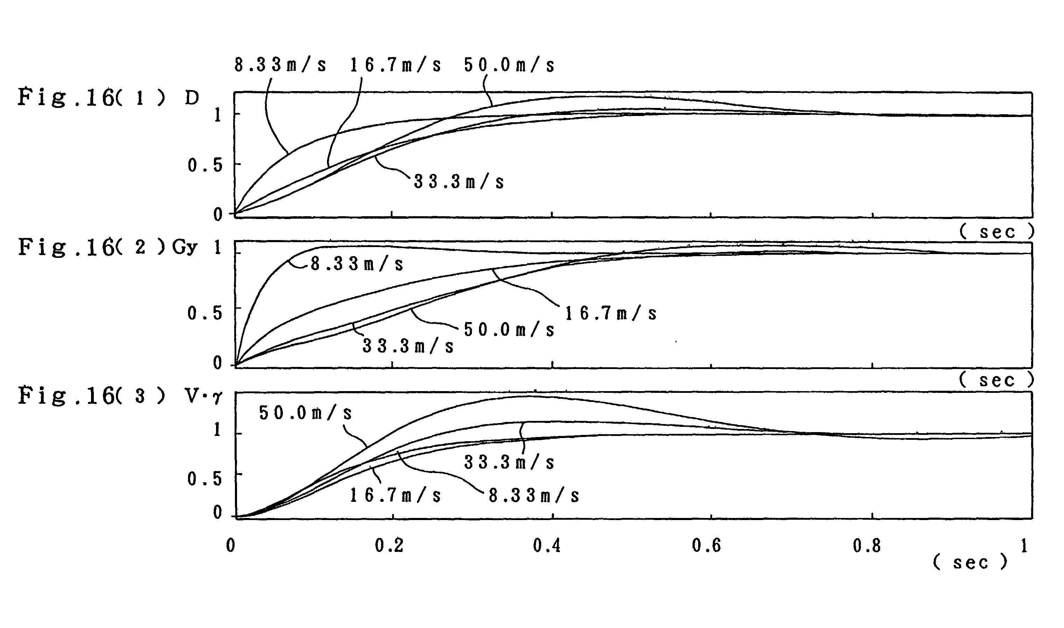

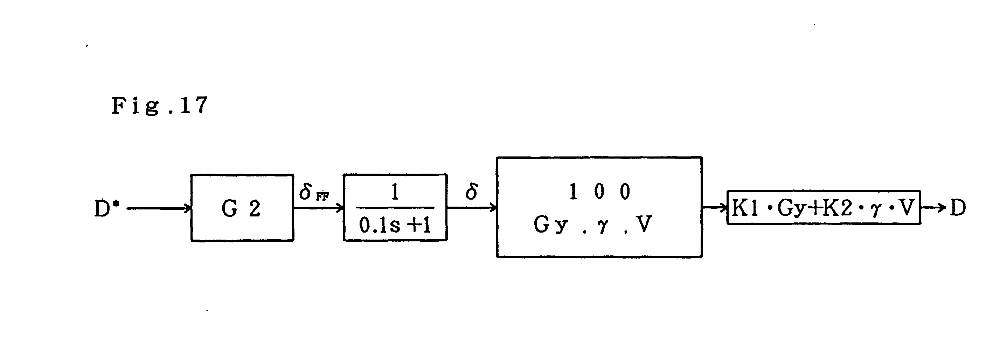

Fig. 16(1) through (3) show the relationship between the behaviour index value D and time, illustrating response simulation results for stepped inputs of D* in the simulation model shown in Fig. 17. Here, the transfer function G2 of $\delta_{FF}$ with respect to D* is taken as $1/G_D$ (v), similarly to the first embodiment, in order to provide a comparison with the fourth embodiment. In the simulation model, the transfer function of $\delta$ with respect to $\delta_{FF}$ is approximated to the first order lag of the time constant 0.1 (sec), namely, 1/(0.1s + 1). The vehicle speed V is taken as 8.33 m/s, 16.7 m/s, 33.3 m/s, and 50.0 m/s. Fig. 16(1) and Fig. 16(2) shows response results for D = Gy, where the value of K1 is set to K1 = 0.5 in Fig. 16(1) and K1 = 1 in Fig. 16(2), respectively, and Fig. 16(3) shows the response results for D = V · $\gamma$ where K1 = 0.

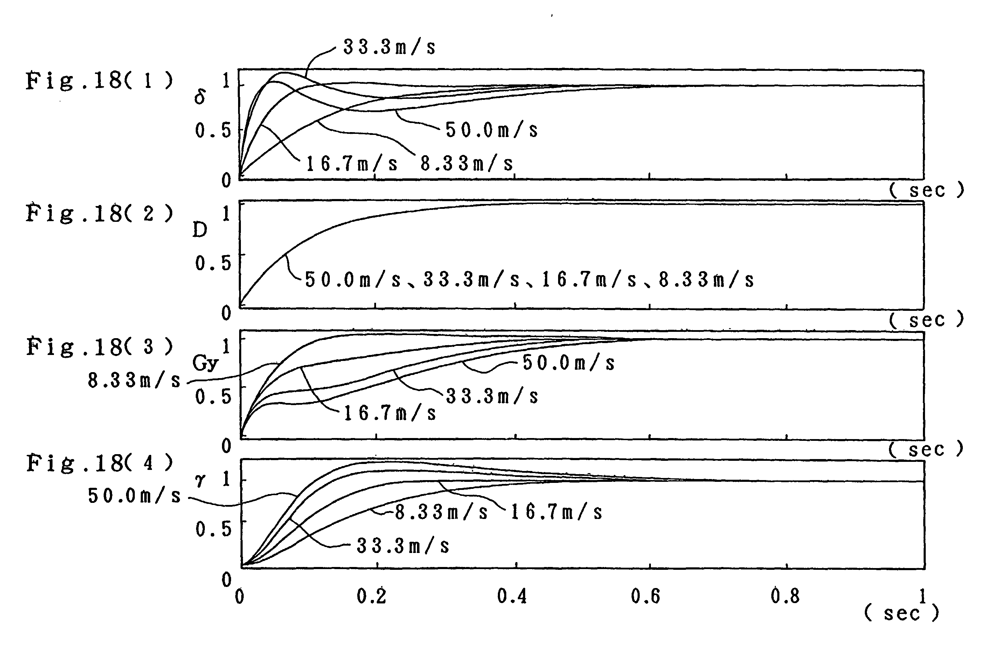

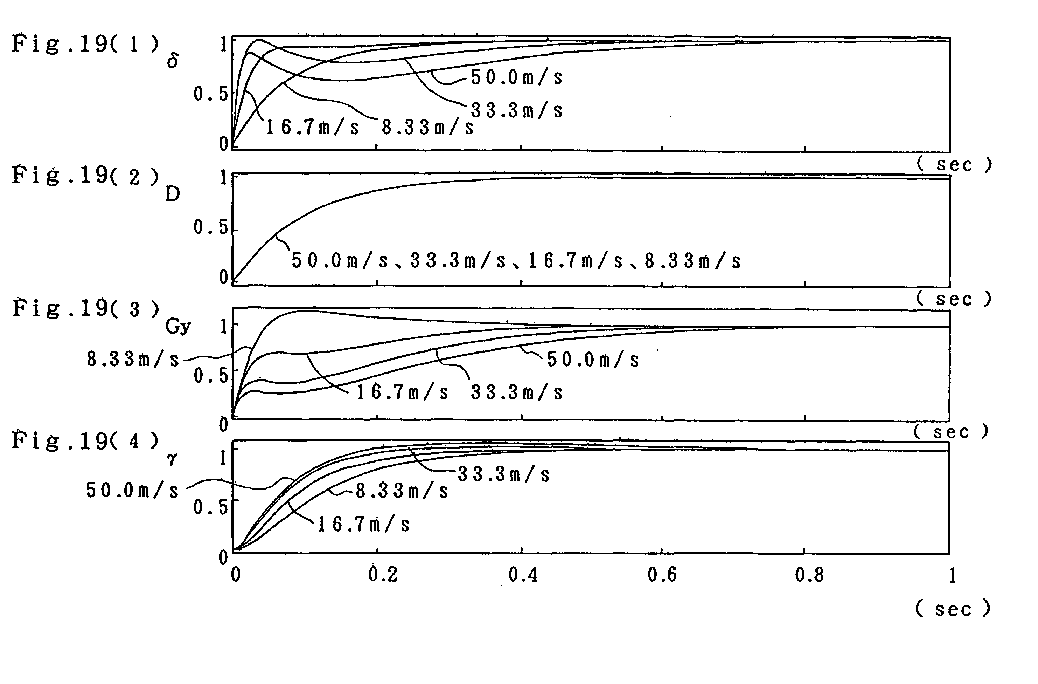

Figs. 18(1) through (4) and Fig. 19 (1) through (4) show the relationships between time and the steering angle $\delta$, behaviour index value D, lateral acceleration Gy, and yaw rate $\gamma$, illustrating response simulation results with respect to stepped inputs of D*, in a case where the transfer function G2 is taken as the inverse of $G_D$ (s) in the simulation model illustrated in Fig. 17. Here, the vehicle speed V is taken as 8.33 m/s, 16.7 m/s, 33.3 m/s, and 50.0 m/s, and in Figs. 18(1) through (4), K1 is taken as K1 = 0.5, whilst in Figs. 19(1) through (4), K1 = 0.25.

According to the response results illustrated in Figs. 18(1) through (4) and Figs. 19(1) through (4), the dynamic changes of $\delta$, Gy and $\gamma$ vary respectively with vehicle speed, but it can be seen that the dynamic change of D remains uniform, irrespective of the vehicle speed. Moreover, responsiveness and stability are improved compared to the response results shown in Figs. 16(1) through (3). Furthermore, when it is supposed that K1 = 0.25, the responsiveness of Gy and $\gamma$ in the low speed range, and the over-shoot of $\gamma$ in the high speed range are improved compared to a case where K1 = 0.5.

Moreover, K1 and K2 are set as functions of the vehicle speed V, in such a manner that the transient response of the vehicle behaviour with respect to change in the steering angle corresponds to a previously determined given response, irrespective of the vehicle speed V. In the present embodiment, the simulation model for $\gamma$ at V = 33.3 m/s shown in Fig. 19(4) is taken as a model, and K1 is taken as a function of vehicle speed V as expressed by the following equation, in such a manner that the transient response of $\gamma$ at any vehicle speed coincides as closely as possible with the transient response at the vehicle speed in the model.

$$K1 = -0.0002205(V - 33.3)^2 + 0.245$$

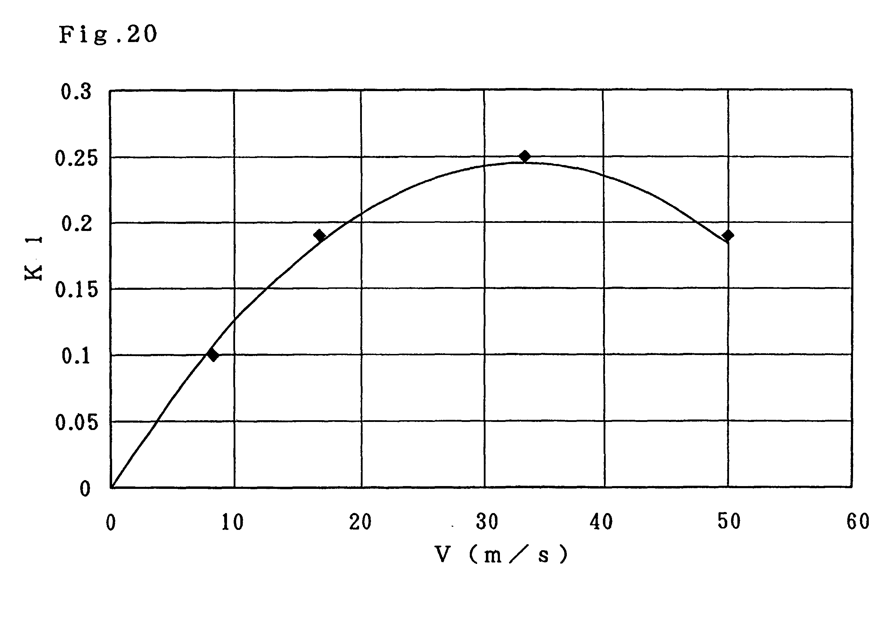

The relationship between V and K1 is shown in Fig. 20. In this case, at V = 8.33 m/s, K1 is adjusted to 0.10, at V = 16.7 m/s, K1 is adjusted to 0.19, at V = 33.3 m/s, K1 is adjusted to 0.25, and at V = 50.0 m/s, K1 is amended to 0.19.

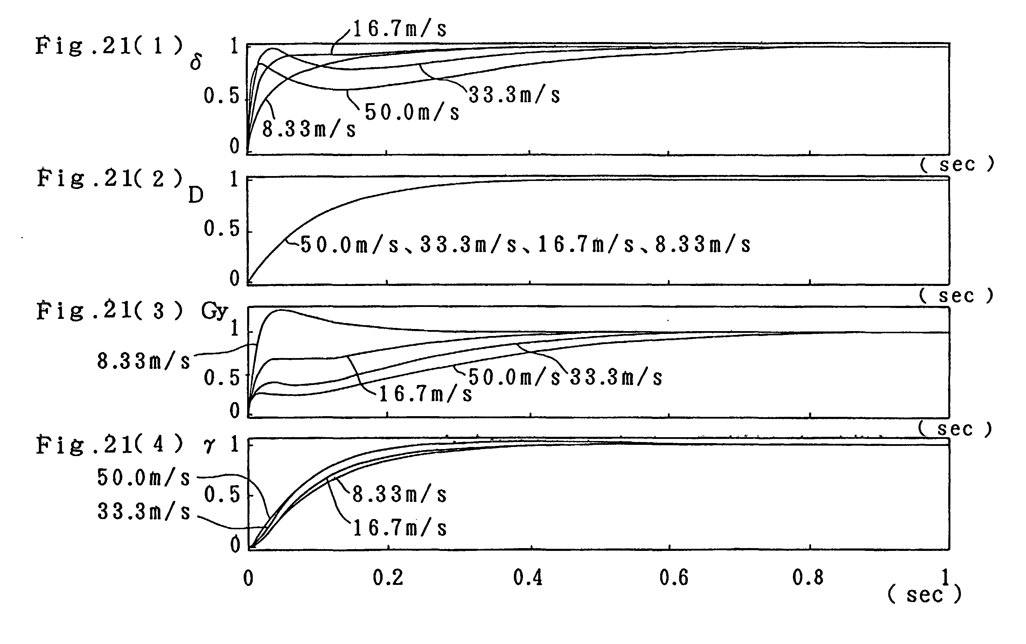

Figs. 21(1) through (4) show response simulation results obtained using the aforementioned amended values for K1. Figs. 21(1) through (4) show response simulation results at the aforementioned vehicle velocities for $\delta$, D, Gy and $\gamma$, respectively, with respect to stepped inputs of D*.

According to the response results shown in Fig. 21(1) through (4), compared to the response results illustrated in Figs. 19(1) through (4), in the transient response obtained using the amended K1 values as described above, approximately equivalent response characteristics are obtained for $\gamma$, and improved responsiveness of Gy is obtained at all vehicle speeds.

Moreover, in the fourth embodiment, the transfer function G3 of $\delta_{FB}$ with respect to the differential (D - D*) between the target behaviour index value D* and the behaviour index value D is taken as corresponding to the inverse of the aforementioned transfer function $G_D$ (s) of the behaviour index value D with respect to the steering angle $\delta$.

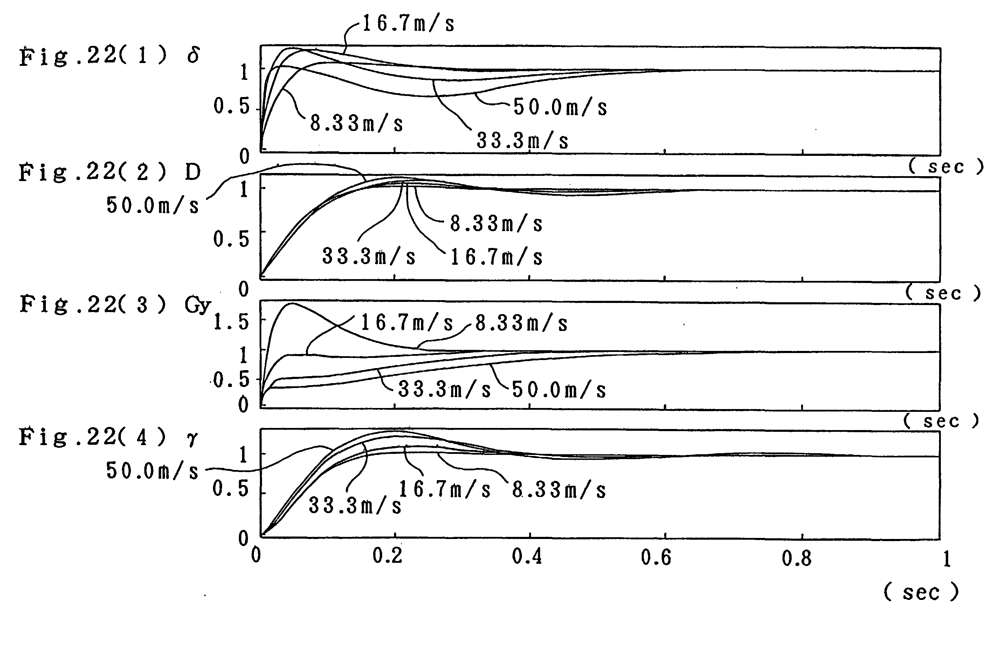

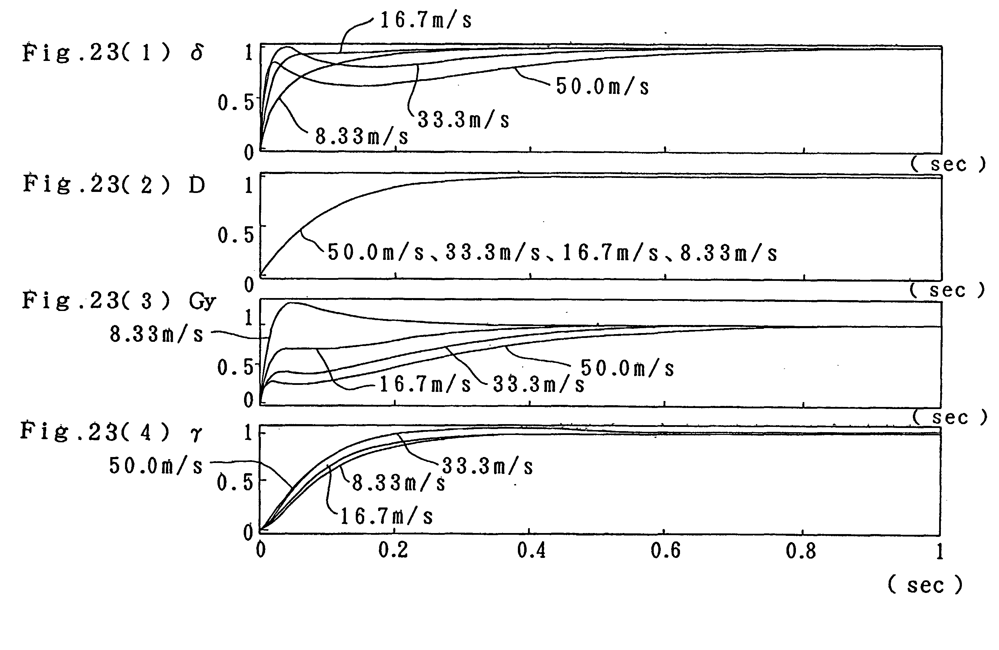

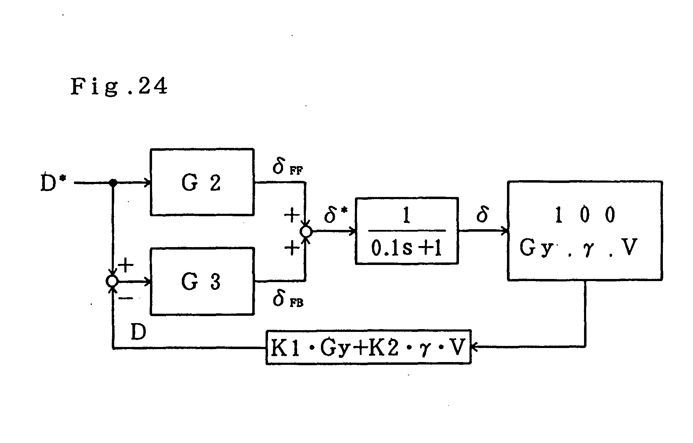

Figs. 22(1) through (4) and Figs. 23 (1) through (4) respectively show the relationships between time and the steering angle $\delta$, behaviour index value D, lateral acceleration Gy and yaw rate $\gamma$, illustrating response simulation results with respect to stepped inputs of D* in the simulation model illustrated in Fig. 24. In this simulation model, the transfer function G2 is taken as the inverse of the transfer function $G_D$ (s) as described above, and moreover, the value of K1 is amended as a function of the vehicle speed V as described above. The transfer function G3 of $\delta_{FB}$ with respect to the differential (D - D*) is taken as a proportional control element, the proportional gain of which is taken as 1 in the response characteristics illustrated in Figs. 22(1) through (4), and as 0.05 in the response characteristics illustrated in Figs. 23(1) through (4). In this simulation model, the transfer function of $\delta$ with respect to $\delta$* is approximated to the first order lag of the time-constant 0.1 (sec), namely 1/(0.1s + 1), apart from which the constitution is similar to the block diagram illustrating control of D with respect to D* in the first embodiment. The vehicle speed V is taken as 8.33 m/s, 16.7 m/s, 33.3 m/s and 50.0 m/s.

From Figs. 22(2) and (3), it is seen that the over-shoot in the high vehicle speed range becomes larger, the greater the proportional gain of the transfer function G3. From Figs. 23(2) and (3), it is seen that the over-shoot can be restricted when the proportional gain of the transfer function G3 is reduced, but in this case, the response characteristics are equivalent to the response results shown in Fig. 21, where no controller of the $\delta_{FB}$ with respect to (D - D*) is provided, and hence it is not possible sufficiently to utilize the advantageous characteristics of performing feed-back control.

Therefore, in order to improve responsiveness in a manner which utilizes the advantageous characteristics of integrated control involving feed-forward control and feed-back control, as described above, the transfer function G3 of $\delta_{FB}$ with respect to (D* - D) is set by taking consideration of the transient response characteristics of the vehicle behaviour with respect to change in steering angle. In other words, taking the transfer function of $\delta$ with respect to $\delta^*$ as $G_a$, the following expression is established.

$$\{G2 \cdot D^* + G3 \cdot (D^* - D)\}G_a \cdot G_D(s)=D$$

Solving this expression with respect to D gives the following equation:

$$D = D^* \cdot (G2 + G3) \cdot G_a \cdot G_D/(G3 \cdot G_a \cdot G_D(s) + 1)$$

Taking the transfer function of D with respect to D*, namely D/D* as G, since G2 = 1/$G_D$ (s), the following expression is established.

$$G=(1+G_D(s) \cdot G3) \cdot G_a(G3 \cdot G_a \cdot G_D(s)+1)$$

Solving this for G3 yields the following equation.

$$G3 = (G - G_a) / \{G_a \cdot G_D(s) \cdot (1 - G)\}$$

Here, taking G as the first-order lag of the time constant $T_a$, namely, 1/($T_a \cdot$ s+1) and $G_a$ as the first-order lag of the time constant $T_b$, namely, 1/($T_b \cdot$ s+1), then G3 is given by the following expression.

$$G3 = (T_b / T_a - 1)/ G_D (s)$$

When $T_a = T_b/2$, then

$$G2 = G3 = 1 / G_D (s).$$

In other words, the transfer function G3 corresponds to the inverse of the transfer function $G_D$ (s).

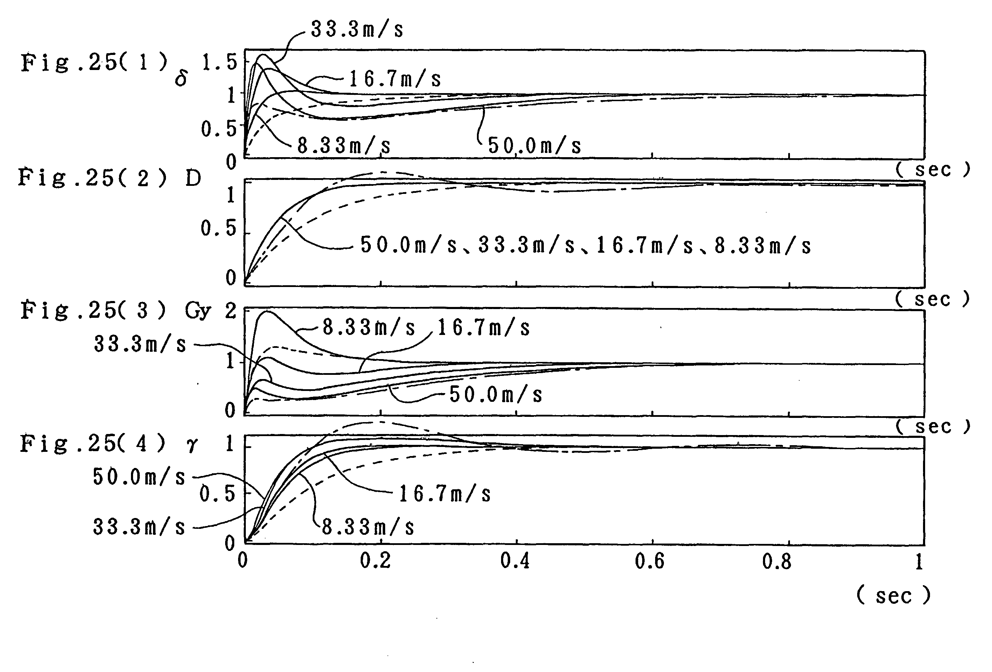

Figs. 25(1) through (4) respectively show the relationships between time and the steering angle $\delta$, behaviour index value D, lateral acceleration Gy, and yaw rate $\gamma$ of the vehicle, illustrating response simulation results for stepped inputs of D* in the simulation model shown in Fig. 24, wherein it is supposed that G2 = G3 = 1 / $G_D$ (s), and K1 is amended as a function of the vehicle speed V as described above. The vehicle speed V is taken as 8.33 m/s, 16.7 m/s, 33.3 m/s, and 50.0 m/s. For the purpose of comparison, the broken lines indicate response simulation results for a vehicle speed of 8.33 m/s, in the simulation model illustrated in Fig. 17 where no controller of $\delta_{FB}$ with respect to (D* - D) is provided, and the single-dotted lines indicate response simulation results for a vehicle speed of 50.0 m/s in the same simulation model.
In the transient response illustrated in Figs. 25(1) through (4), the response at start up is rapid, and the overshoot of D and $\gamma$ in the high speed range is restricted, and hence both responsiveness and stability are improved.
According to the fourth embodiment described above, similar beneficial effects to those in the first to third embodiments can be achieved. Moreover, since the relationship between the target behaviour index value D* and the steering angle set value $\delta_{FF}$ corresponds to the inverse of the transfer function $G_D$ (s) corresponding to the transient response characteristics of the vehicle behaviour with respect to change in the steering angle, it is possible to improve the responsiveness and stability of the transient response by means of feed-forward control. Moreover, since the relationship between the steering angle correction value $\delta_{FB}$ and the differential (D* - D) of the target behaviour index value D* and the behaviour index value D corresponds to the inverse of the transfer function $G_D$ (s) relating to the transient response characteristics of the vehicle behaviour with respect to change in the steering angle, it is also possible to improve the responsiveness and stability of the transient response by means of feed-back control. Moreover, by making K1 and K2 functions of the vehicle speed V, whereby the transient response of the vehicle behaviour with respect to change in the steering angle corresponds to a previously determined uniform response irrespective of the vehicle speed, it is possible to make the transient response of the vehicle behaviour with respect to change in the steering angle correspond to a model response, thereby improving the transient response characteristics. Consequently, it is possible to improve the steering feel and the stability of the vehicle behaviour.

**Claims**

1. A steering device for a vehicle comprising:

an operating member (1);
a steering actuator (2) driven in accordance with operation of said operating member (1);
means (3) for transmitting the movement of said steering actuator (2) to the wheels (4) of a vehicle in such a manner that the steering angle ($\delta$) changes in accordance with said movement, without said operating member (1) being coupled mechanically to said vehicle wheels (4);
means (14, 15, 16, 20) for determining a behaviour index value (D) corresponding to change in the behaviour of the vehicle;
means (11, 12) for detecting the amount of operation ($\delta h$) of said operating member (1);
means (20) for calculating a target behaviour index value (D*) corresponding to the detected amount of operation ($\delta h$), on the basis of a stored relationship between the amount of operation and the target behaviour index value (D*); and
means (20) for calculating a steering angle set value ($\delta_{FF}$) corresponding to the calculated target behaviour index value (D*), on the basis of a stored relationship between the target behaviour index value (D*) and the steering angle set value ($\delta_{FF}$);

**characterized by**:

means (20) for calculating a steering angle correction value ($\delta_{FB}$) corresponding to the differential between the target behaviour index value (D*) and said determined behaviour index valuer (D), on the basis of a stored relationship between this differential and the steering angle correction value ($\delta_{FB}$); and
means (20) for controlling said steering actuator (2) in such a manner that the steering angle corresponds to a target steering angle ($\delta$*) being the sum of the steering angle set value ($\delta_{FF}$) and the steering angle correction value ($\delta_{FB}$).

2. The steering device for a vehicle according to claim 1, wherein the stored relationship between the target behaviour index value (D*) and the steering angle set value ($\delta_{FF}$) corresponds to the inverse of the transfer function of the behaviour index value (D) with respect to the steering angle.

3. The steering device for a vehicle according to claim 1 or 2, wherein the stored relationship between the differential of the target behaviour index value (D*) and the behaviour index value (D), and the steering angle correction value ($\delta_{FB}$), corresponds to the inverse of the transfer function of the behaviour index value (D) with respect to the steering angle.

4. The steering device for a vehicle according to any one of claims 1 to 3, wherein said target behaviour index value (D*) is calculated in such a manner that the ratio of the yaw rate ($\gamma$) or lateral acceleration (Gy) of the vehicle with respect to the amount of operation ($\delta h$) of the operating member (1) is uniform irrespective of the vehicle speed (V).

5. The steering device for a vehicle according to any one of claims 1 to 4,
wherein said operating member (1) is rotationally operated;
the amount of operation ($\delta h$) of said operating member (1) is taken as the operating torque (Th) imparted to the operating member (1) by the driver of the vehicle;
and an operating actuator (19) for generating a reactive torque (Tm) acting on the operating member (1) is provided;
said steering device further comprising :
means (11) for detecting the rotational operating angle ($\delta h$) of the operating member (1) due to the action of the differential between the detected operating torque (Th) and the generated reactive torque (Tm);
means (20) for calculating a target reactive torque (Tm*) corresponding to the detected rotational operating angle ($\delta h$), on the basis of a stored relationship between the rotational operating angle ($\delta h$) and the target reactive torque (Tm*); and

means (20) for controlling the operating actuator (19) in such a manner that the reactive torque (Tm) corresponds to the target reactive torque (Tm*).

6. The steering device for a vehicle according to any one of claims 1 to 4,
wherein said operating member (1) is rotationally operated;
the amount of operation ($\delta$h) of said operating member (1) is taken as the operating torque (Th) imparted to the operating member (1) by the driver of the vehicle;
and an operating actuator (19) for generating a reactive torque (Tm) acting on the operating member (1) is provided;
said steering device further comprising :
means (11) for detecting the rotational operating angle ($\delta$h) of the operating member (1) due to the action of the differential between the detected operating torque (Th) and the generated reactive torque (Tm);
means (20) for calculating a reactive torque set value ($T_{FF}$) corresponding to the detected rotational operating angle ($\delta$h), on the basis of a stored relationship between the rotational operating angle ($\delta$h) and the reactive torque set value ($T_{FF}$),
means (20) for calculating a behaviour-related rotational operating angle ($\delta_D$) for the operating member (1) corresponding to the determined behaviour index value (D), on the basis of a stored relationship between the behaviour index value (D) and the behaviour-related rotational operating angle ($\delta_D$) ;
means (20) for calculating a reactive torque correction value ($T_{FB}$) corresponding to the differential between the detected rotational operating angle ($\delta$h) and the calculated behaviour-related rotational operating angle ($\delta_D$), on the basis of a stored relationship between this differential and the reactive torque correction value ($T_{FB}$); and
means (20) for controlling the operating actuator (19) in such a manner that the reactive torque (Tm) corresponds to a target reactive torque (Tm*) being the sum of the reactive torque set value ($T_{FF}$) and the reactive torque correction value ($T_{FB}$).

7. The steering device for a vehicle according to claim 6, wherein the reactive torque correction value ($T_{FB}$) is taken as zero, at speeds lower than a previously set vehicle speed (V).

8. The steering device for a vehicle according to any one of claims 1 to 7, wherein, at speeds lower than a previously set vehicle speed (V), a target steering angle ($\delta$*) corresponding to the detected amount of operation ($\delta$h) of the operating member (1) is calculated on the basis of a stored relationship between the amount of operation ($\delta$h) of the operating member (1) and the target steering angle ($\delta$*), and the steering angle correction value ($\delta_{FB}$) is taken as zero.

9. The steering device for a vehicle according to any one of claims 1 to 8, wherein, when the lateral acceleration of the vehicle is taken as Gy, the yaw rate of the vehicle as $\gamma$, the speed of the vehicle as V, the weighted ratio of the lateral acceleration as K1, the weighted ratio of the yaw rate as K2, and K1 + K2 = 1, the behaviour index value is determined as a value D expressed by

$$D = K1 \cdot Gy + K2 \cdot \gamma \cdot V,$$

the stored relationship between the target behaviour index value (D*) and the steering angle set value ($\delta_{FF}$) corresponds to the inverse of the transfer function of the behaviour index value (D) with respect to the steering angle, and
the transfer function of the behaviour index value (D) with respect to the steering angle is derived on the basis of a previously determined equation of motion containing the lateral acceleration (Gy), yaw rate ($\gamma$), steering angle ($\delta$) and speed (V) of the vehicle as unknown quantities, in such a manner that at least one of either K1 or K2 is included therein, so that said function corresponds to the transient response of the vehicle behaviour with respect to change in the steering angle ($\delta$).

10. The steering device for a vehicle according to claim 9, wherein K1 and K2 are taken as functions of the vehicle speed (V), in such a manner that the transient response of the vehicle behaviour with respect to change in the steering angle ($\delta$) corresponds to a previously determined uniform response irrespective of the vehicle speed (V).

**Patentansprüche**

1. Lenkvorrichtung für ein Fahrzeug, die folgendes aufweist:

   ein Betätigungselement (1);
   ein gemäß einer Betätigung des Betätigungselements (1) angetriebenes Lenk-Stellglied (2);
   eine Einrichtung (3) zum Übertragen der Bewegung des Lenk-Stellglieds (2) zu den Rädern (4) eines Fahrzeugs auf eine derartige Weise, dass sich der Lenkwinkel ($\delta$) gemäß der Bewegung ändert, ohne dass das Betätigungselement (1) mechanisch mit den Fahrzeugrädern (4) gekoppelt ist;
   eine Einrichtung (14, 15, 16, 20) zum Bestimmen eines Verhaltensindexwerts (D) entsprechend einer Änderung im Verhalten des Fahrzeugs;
   eine Einrichtung (11, 12) zum Erfassen des Betätigungsausmaßes ($\delta$h) des Betätigungselements (1);
   eine Einrichtung (20) zum Berechnen eines Soll-Verhaltensindexwerts (D*) entsprechend dem erfassten Betätigungsausmaß ($\delta$h) auf der Basis einer gespeicherten Beziehung zwischen dem Betätigungsbetrag und dem Soll-Verhaltensindexwert (D*); und
   eine Einrichtung (20) zum Berechnen eines Lenkwinkel-Einstellwerts ($\delta_{FF}$) entsprechend dem berechneten Soll-Verhaltensindexwert (D*) auf der Basis einer gespeicherten Beziehung zwischen dem Soll-Verhaltensindexwert (D*) und dem Lenkwinkel-Einstellwert ($\delta_{FF}$);

   **gekennzeichnet durch**
   eine Einrichtung (20) zum Berechnen eines Lenkwinkel-Korrekturwerts ($\delta_{FB}$) entsprechend dem Differential zwischen dem Soll-Verhaltensindexwert (D*) und dem bestimmten Verhaltensindexwert (D) auf der Basis einer gespeicherten Beziehung zwischen dem Differential und dem Lenkwinkel-Korrekturwert ($\delta_{FB}$); und
   eine Einrichtung (20) zum Steuern des Lenk-Stellglieds (2) auf eine derartige Weise, dass der Lenkwinkel einem Soll-Lenkwinkel ($\delta$*) entspricht, der die Summe aus dem Lenkwinkel-Einstellwert ($\delta_{FF}$) und dem Lenkwinkel-Korrekturwert ($\delta_{FB}$) ist.

2. Lenkvorrichtung für ein Fahrzeug nach Anspruch 1, wobei die gespeicherte Beziehung zwischen dem Soll-Verhaltensindexwert (D*) und dem Lenkwinkel-Einstellwert ($\delta_{FF}$) dem Inversen der Übertragungsfunktion des Verhaltensindexwerts (D) in Bezug auf den Lenkwinkel entspricht.

3. Lenkvorrichtung für ein Fahrzeug nach Anspruch 1 oder 2, wobei die gespeicherte Beziehung zwischen dem Differential des Soll-Verhaltensindexwerts (D*) und des Verhaltensindexwerts (D) und dem Lenkwinkel-Korrekturwert ($\delta_{FB}$) dem Inversen der Übertragungsfunktion des Verhaltensindexwerts (D) in Bezug auf den Lenkwinkel entspricht.

4. Lenkvorrichtung für ein Fahrzeug nach einem der Ansprüche 1 bis 3, wobei der Soll-Verhaltensindexwert (D*) auf eine derartige Weise berechnet wird, dass das Verhältnis der Gierrate ($\gamma$) oder der lateralen Beschleunigung (Gy) des Fahrzeugs in Bezug zum Betätigungsausmaß ($\delta$h) des Betätigungselements (1) ungeachtet der Fahrzeuggeschwindigkeit (V) einheitlich ist.

5. Lenkvorrichtung für ein Fahrzeug nach einem der Ansprüche 1 bis 4, wobei
   das Betätigungselement (1) rotationsmäßig betätigt wird;
   das Betätigungsausmaß ($\delta$h) des Betätigungselements (1) als das Betätigungsdrehmoment (Th) genommen wird, das dem Betätigungselement (1) durch den Fahrer des Fahrzeugs übertragen wird;
   und ein Betätigungs-Stellglied (19) zum Erzeugen eines Reaktionsdrehmoments (Tm) vorgesehen ist, das auf das Betätigungselement (1) wirkt;
   wobei die Lenkvorrichtung weiterhin folgendes aufweist:
   eine Einrichtung (11) zum Erfassen des Rotationsbetätigungswinkels ($\delta$h) des Betätigungselements (1) aufgrund der Wirkung des Differentials zwischen dem erfassten Betätigungsdrehmoment (Th) und dem erzeugten Reaktionsdrehmoment (Tm);
   eine Einrichtung (20) zum Berechnen eines Soll-Reaktionsdrehmoments (Tm*) entsprechend dem erfassten Rotationsbetätigungswinkel ($\delta$h) auf der Basis einer gespeicherten Beziehung zwischen dem Rotationsbetätigungswinkel ($\delta$h) und dem Soll-Reaktionsdrehmoment (Tm*); und
   eine Einrichtung (20) zum Steuern des Betätigungs-Stellglieds (19) auf eine derartige Weise, dass das Reaktionsdrehmoment (Tm) dem Soll-Reaktionsdrehmoment (Tm*) entspricht.

6. Lenkvorrichtung für ein Fahrzeug nach einem der Ansprüche 1 bis 4, wobei

das Betätigungselement (1) rotationsmäßig betätigt wird;

das Betätigungsausmaß ($\delta$h) des Betätigungselements (1) als das Betätigungsdrehmoment (Th) genommen wird, das dem Betätigungselement (1) durch den Fahrer des Fahrzeugs übertragen wird;

und ein Betätigungs-Stellglied (19) zum Erzeugen eines Reaktionsdrehmoments (Tm) vorgesehen ist, das auf das Betätigungselement (1) wirkt;

wobei die Lenkvorrichtung weiterhin folgendes aufweist:

eine Einrichtung (11) zum Erfassen des Rotationsbetätigungswinkels ($\delta$h) des Betätigungselements (1) aufgrund der Wirkung des Differentials zwischen dem erfassten Betätigungsdrehmoment (Th) und dem erzeugten Reaktionsdrehmoment (Tm);

eine Einrichtung (20) zum Berechnen eines Reaktionsdrehmoment-Einstellwerts ($T_{FF}$) entsprechend dem erfassten Rotationsbetätigungswinkel ($\delta$h) auf der Basis einer gespeicherten Beziehung zwischen dem Rotationsbetätigungswinkel ($\delta$h) und dem Reaktionsdrehmoment-Einstellwert ($T_{FF}$);

eine Einrichtung (20) zum Berechnen eines auf ein Verhalten bezogenen Rotationsbetätigungswinkels ($\delta_D$) für das Betätigungselement (1) entsprechend dem bestimmten Verhaltensindexwert (D) auf der Basis einer gespeicherten Beziehung zwischen dem Verhaltensindexwert (D) und dem auf ein Verhalten bezogenen Rotationsbetätigungswinkel ($\delta_D$);

eine Einrichtung (20) zum Berechnen eines Reaktionsdrehmoment-Korrekturwerts ($T_{FB}$) entsprechend dem Differential zwischen dem erfassten Rotationsbetätigungswinkel ($\delta$h) und dem berechneten auf ein Verhalten bezogenen Rotationsbetätigungswinkel ($\delta_D$) auf der Basis einer gespeicherten Beziehung zwischen diesem Differential und dem Reaktionsdrehmoment-Korrekturwert ($T_{FB}$); und

eine Einrichtung (20) zum Steuern des Betätigungs-Stellglieds (19) auf eine derartige Weise, dass das Reaktionsdrehmoment (Tm) einem Soll-Reaktionsdrehmoment (Tm*) entspricht, das die Summe aus dem Reaktionsdrehmoment-Einstellwert ($T_{FF}$) und dem Reaktionsdrehmoment-Korrekturwert ($T_{FB}$) ist.

7. Lenkvorrichtung für ein Fahrzeug nach Anspruch 6, wobei der Reaktionsdrehmoment-Korrekturwert ($T_{FB}$) bei Geschwindigkeiten, die niedriger als eine zuvor eingestellte Fahrzeuggeschwindigkeit (V) sind, als Null angenommen wird.

8. Lenkvorrichtung für ein Fahrzeug nach einem der Ansprüche 1 bis 7, wobei bei Geschwindigkeiten, die niedriger als eine zuvor eingestellte Fahrzeuggeschwindigkeit (V) sind, ein Soll-Lenkwink ($\delta$*) entsprechend dem erfassten Betätigungsausmaß ($\delta$h) des Betätigungselements (1) auf der Basis einer gespeicherten Beziehung zwischen dem Betätigungsausmaß ($\delta$h) des Betätigungselements (1) und dem Soll-Lenkwinkel ($\delta$*) berechnet wird und der Lenkwinkel-Korrekturwert ($\delta_{FB}$) als Null angenommen wird.

9. Lenkvorrichtung für ein Fahrzeug nach einem der Ansprüche 1 bis 8, wobei dann, wenn die laterale Beschleunigung des Fahrzeugs als Gy, die Gierrate des Fahrzeugs als $\gamma$, die Geschwindigkeit des Fahrzeugs als V, das gewichtete Verhältnis der lateralen Beschleunigung als K1, das gewichtete Verhältnis der Gierrate als K2 und K1 + K2 = 1 angenommen werden, der Verhaltensindexwert als ein Wert D bestimmt wird, der ausgedrückt wird durch

$$D = K1 \cdot Gy + K2 \cdot \gamma \cdot V,$$

die gespeicherte Beziehung zwischen dem Soll-Verhaltensindexwert (D*) und dem Lenkwinkel-Einstellwert ($\delta_{FF}$) dem Inversen der Übertragungsfunktion des Verhaltensindexwerts (D) in Bezug auf den Lenkwinkel entspricht, und

die Übertragungsfunktion des Verhaltensindexwerts (D) in Bezug auf den Lenkwinkel auf der Basis einer zuvor bestimmten Bewegungsgleichung, die die laterale Beschleunigung (Gy), die Gierrate ($\gamma$), den Lenkwinkel ($\delta$) und die Geschwindigkeit (V) des Fahrzeugs als unbekannte Größen enthält, auf eine derartige Weise abgeleitet wird, dass K1 und/oder K2 darin enthalten ist, so dass die Funktion dem Einschwingverhalten bzw. der Übergangsfunktion des Fahrzeugverhaltens in Bezug auf eine Änderung bezüglich des Lenkwinkels ($\delta$) entspricht.

10. Lenkvorrichtung für ein Fahrzeug nach Anspruch 9, wobei K1 und K2 auf eine derartige Weise als Funktionen der Fahrzeuggeschwindigkeit (V) genommen werden, dass das Einschwingverhalten bzw. die Übergangsfunktion des Fahrzeugverhaltens in Bezug auf eine Änderung bezüglich des Lenkwinkels ($\delta$) ungeachtet der Fahrzeuggeschwindigkeit (V) einer zuvor bestimmten einheitlichen Reaktion entspricht.

**Revendications**

1. Un dispositif de direction d'un véhicule comprenant :

   un élément de commande (1);
   un vérin de direction (2) entraîné en fonction de la commande dudit élément de commande (1);
   des moyens (3) pour transmettre le mouvement dudit vérin de direction (2) aux roues (4) d'un véhicule de sorte que l'angle de braquage ($\delta$) change en fonction dudit mouvement, sans que ledit élément de commande (1) ne soit couplé mécaniquement auxdites roues du véhicule (4) ;
   des moyens (14, 15, 16, 20) pour déterminer une valeur d'index de comportement (D) correspondant au changement de comportement du véhicule ;
   des moyens (11, 12) pour détecter le degré de commande ($\delta$h) dudit élément de commande (1) ;
   des moyens (20) pour calculer une valeur d'index de comportement cible (D*) correspondant au degré de commande ($\delta$h) détecté, sur la base d'une relation stockée entre le degré de commande et la valeur d'index de comportement cible (D*) ; et
   des moyens (20) pour calculer une valeur de consigne de l'angle de braquage ($\delta$FF) correspondant à la valeur d'index de comportement cible (D*) calculée, sur la base d'une relation stockée entre la valeur d'index de comportement cible (D*) et la valeur de consigne de l'angle de braquage ($\delta$FF) ;

   **caractérisé par** :

   des moyens (20) pour calculer une valeur de correction de l'angle de braquage ($\delta$FB) correspondant à l'écart entre la valeur d'index de comportement cible (D*) et ladite valeur d'index de comportement (D) déterminée, sur la base d'une relation stockée entre cet écart et la valeur de correction de l'angle de braquage ($\delta$FB); et
   des moyens (20) pour contrôler ledit vérin de direction (2) de sorte que l'angle de braquage corresponde à un angle de braquage cible ($\delta$*) étant la somme de la valeur de consigne de l'angle de braquage ($\delta$FF) et de la valeur de correction de l'angle de braquage ($\delta$FB).

2. Le dispositif de direction d'un véhicule selon la revendication 1, dans lequel la relation stockée entre la valeur d'index de comportement cible (D*) et la valeur de consigne de l'angle de braquage ($\delta$FF) correspond à l'inverse de la fonction de transfert de la valeur d'index de comportement (D) par rapport à l'angle de braquage.

3. Le dispositif de direction d'un véhicule selon la revendication I ou 2, dans lequel la relation stockée entre l'écart entre la valeur d'index de comportement cible (D*) et la valeur d'index de comportement (D), et la valeur de correction de l'angle de braquage ($\delta$FB) correspond à l'inverse de la fonction de transfert de la valeur d'index de comportement (D) par rapport à l'angle de braquage.

4. Le dispositif de direction d'un véhicule selon l'une quelconque des revendications 1 à 3, dans lequel ladite valeur d'index de comportement cible (D*) est calculée de telle manière que le rapport de la vitesse angulaire de lacet ($\delta$) ou d'accélération latérale (Gy) du véhicule par rapport au degré de commande ($\delta$h) de l'élément de commande (1) est uniforme, quelle que soit la vitesse du véhicule (V).

5. Le dispositif de direction d'un véhicule selon l'une quelconque des revendications 1 à 4, dans lequel ledit élément de commande (1) est actionné rotationnellement ;
   le degré de commande ($\delta$h) dudit élément de commande (1) est considéré comme le couple de commande (Th) transmis à l'élément de commande (1) par le conducteur du véhicule ;
   et un vérin de commande (19) pour générer un couple réactif (Tm) agissant sur l'élément de commande (1) est prévu ;
   ledit dispositif de direction comprenant également

   des moyens (11) pour détecter l'angle de commande rotationnelle ($\delta$h) de l'élément de commande (1) dû à l'action de l'écart entre le couple de commande (Th) détecté et le couple réactif (Tm) généré ;
   des moyens (20) pour calculer un couple réactif cible (Tm*) correspondant à l'angle de commande rotationnelle ($\delta$h) détecté, sur la base d'une relation stockée entre l'angle de commande rotationnelle ($\delta$h) et le couple réactif cible (Tm*) ; et
   des moyens (20) pour contrôler le vérin de commande (19) de telle manière que le couple réactif (Tm) corresponde au couple réactif cible (Tm*).

**6.** Le dispositif de direction d'un véhicule selon l'une quelconque des revendications 1 à 4, dans lequel ledit élément de commande (1) est actionné rotationnellement ;

le degré de commande (δh) dudit élément de commande (1) est considéré comme le couple de commande (Th) transmis à l'élément de commande (1) par le conducteur du véhicule ;

et un vérin de commande (19) pour générer un couple réactif (Tm) agissant sur l'élément de commande (1) est prévu ;

ledit dispositif de direction comprenant également

des moyens (11) pour détecter l'angle de commande rotationnelle (δh) de l'élément de commande (1) dû à l'action de l'écart entre le couple de commande (Th) détecté et le couple réactif (Tm) généré ;

des moyens (20) pour calculer une valeur de consigne du couple réactif (TFF) correspondant à l'angle de commande rotationnelle (δh) détecté, sur la base d'une relation stockée entre l'angle de commande rotationnelle (δh) et la valeur de consigne de couple réactif (TFF) ;

des moyens (20) pour calculer un angle de commande rotationnelle lié au comportement (δD) pour l'élément de commande (1) correspondant à la valeur d'index de comportement (D) déterminée, sur la base d'une relation stockée entre la valeur d'index de comportement (D) et l'angle de commande rotationnelle lié au comportement (δD) ;

des moyens (20) pour calculer une valeur de correction du couple réactif (TFB) correspondant à l'écart entre l'angle de commande rotationnelle (δh) détecté et l'angle de commande rotationnelle lié au comportement (δD) calculé, sur la base d'une relation stockée entre cet écart et la valeur de correction du couple réactif (TFB) ; et

des moyens (20) pour contrôler le vérin de commande (19) de telle manière que le couple réactif (Tm) corresponde à un couple réactif cible (Tm*) étant la somme de la valeur de consigne du couple réactif (TFF) et de la valeur de correction du couple réactif (TFB).

**7.** Le dispositif de direction d'un véhicule selon la revendication 6, dans lequel la valeur de correction du couple réactif (TFB) est considérée comme zéro, à des vitesses inférieures à une vitesse de véhicule préalablement fixée (V).

**8.** Le dispositif de direction d'un véhicule selon l'une quelconque des revendications 1 à 7, dans lequel, à des vitesses inférieures à une vitesse de véhicule préalablement fixée (V), un angle de braquage cible (δ*) correspondant au degré de commande (δh) détecté de l'élément de commande (1) est calculé sur la base d'une relation stockée entre le degré de commande (δh) de l'élément de commande (1) et l'angle de braquage cible (δ*), et la valeur de correction de l'angle de braquage (δFB) est considérée comme zéro.

**9.** Le dispositif de direction d'un véhicule selon l'une quelconque des revendications 1 à 8, dans lequel, lorsque l'accélération latérale du véhicule est considérée comme Gy, la vitesse angulaire de lacet du véhicule comme δ, la vitesse du véhicule comme V, le rapport pondéré de l'accélération latérale comme K1, le rapport pondéré de la vitesse angulaire de lacet comme K2, et K1 + K2 = 1, la valeur d'index de comportement est déterminée comme une valeur D, exprimée par

$$D = K1 . Gy + K2 . \delta . V,$$

La relation stockée entre la valeur d'index de comportement cible (D*) et la valeur de consigne de l'angle de braquage (δFF) correspond à l'inverse de la fonction de transfert de la valeur d'index de comportement (D) par rapport à l'angle de braquage, et

La fonction de transfert de la valeur d'index de comportement (D) par rapport à l'angle de braquage est dérivée sur la base d'une équation de mouvement préalablement déterminée contenant l'accélération latérale (Gy), la vitesse angulaire de lacet (γ), l'angle de braquage (δ) et la vitesse (V) du véhicule comme grandeurs inconnues, de telle manière qu'au moins un de soit K1 ou K2 soit inclus dedans, de sorte que ladite fonction corresponde à la réponse transitoire du comportement du véhicule par rapport au changement de l'angle de braquage (δ).

**10.** Le dispositif de direction d'un véhicule selon la revendication 9, dans lequel K1 et K2 sont considérés comme fonctions de la vitesse (V) du véhicule, de telle manière que la réponse transitoire du comportement du véhicule par rapport au changement de l'angle de braquage (δ) corresponde à une réponse uniforme préalablement déterminée, quelle que soit la vitesse (V) du véhicule.

Fig.1

Fig.2

Fig.3

Fig.4

Fig.5

START

1 READ IN DATA

2 $Tm^* = G5 \cdot \delta h$

3 CONTROL OPERATING ACTUATOR

4 $V \geqq Va$ ?

NO

12 $\delta^* = G6 \cdot \delta h$

YES

5 $D^* = G1 \cdot \delta h$

6 $\delta_{FF} = G2 \cdot D^*$

7 $\delta_{FB} = G3 \cdot (D^* - D)$

8 $\delta^* = \delta_{FF} + \delta_{FB}$

9 $i^* = G4 \cdot \delta^*$

10 CONTROL STEERING ACTUATOR

11 FINISHED?

NO

YES

END

Fig.6

Fig.7



**EP 1 097 855 B1**

Fig.8

```
                    START

101        READ IN DATA

102        Tm* = G5 · δh

103    CONTROL OPERATING ACTUATOR

104          V ≧ Va ?  ──NO──→  112   δ* = G12 · Th
                │
               YES
105        D* = G11 · Th

106        δFF = G2 · D*

107        δFB = G3 · (D* − D)

108        δ* = δFF + δFB

109        i* = G4 · δ*

110    CONTROL STEERING ACTUATOR

111  NO      FINISHED?
                │
               YES
                │
              END
```

31

Fig.9

EP 1 097 855 B1

Fig.10

START

201 READ IN DATA

202 $V \geqq V a$ ? — NO

YES

203 $T_{FF} = G13 \cdot \delta h$

204 $\delta_D = G14 \cdot D$

205 $T_{FB} = G15 \cdot (\delta h - \delta_D)$

206 CONTROL OPERATING ACTUATOR

207 $D^* = G11 \cdot Th$

208 $\delta_{FF} = G2 \cdot D^*$

209 $\delta_{FB} = G3 \cdot (D^* - D)$

210 $\delta^* = \delta_{FF} + \delta_{FB}$

211 $i^* = G4 \cdot \delta^*$

212 CONTROL STEERING ACTUATOR

213 FINISHED?

NO

YES

END

214 $Tm^* = G5 \cdot \delta h$

215 CONTROL OPERATING ACTUATOR

216 $\delta^* = G12 \cdot Th$

Fig.11

Fig.12

Fig.13

Fig.14

Fig.15(1)

8.33m/s    50.0m/s

11.1m/s    41.7m/s    K1=0.5,K2=0.5

16.7m/s

22.2m/s    33.3m/s

( sec )

Fig.15(2)

50.0m/s    41.7m/s

8.33m/s    22.2m/s    K1=0.1,K2=0.9

11.1m/s    33.3m/s    16.7m/s

( sec )

Fig.15(3)

8.33m/s

11.1m/s    K1=1,K2=0

16.7m/s

22.2m/s

33.3m/s    41.7m/s

50.0m/s

( sec )

Fig.15(4)

50.0m/s    41.7m/s    K1=0,K2=1

22.2m/s

33.3m/s

8.33m/s    11.1m/s    16.7m/s

0    0.2    0.4    0.6    0.8    1    1.2

( sec )

EP 1 097 855 B1

Fig.16(1) D

8.33m/s  16.7m/s  50.0m/s

33.3m/s

( sec )

Fig.16(2) Gy

8.33m/s

16.7m/s

50.0m/s

33.3m/s

( sec )

Fig.16(3) V·γ

50.0m/s

33.3m/s

16.7m/s      8.33m/s

0      0.2      0.4      0.6      0.8      1

( sec )

EP 1 097 855 B1

Fig.17

$$D^* \longrightarrow \boxed{G\,2} \xrightarrow{\delta_{FF}} \boxed{\dfrac{1}{0.1s+1}} \xrightarrow{\delta} \boxed{\begin{array}{c} 1\,0\,0 \\ Gy \cdot \gamma \cdot V \end{array}} \longrightarrow \boxed{K1 \cdot Gy + K2 \cdot \gamma \cdot V} \longrightarrow D$$

Fig.18(1)

Fig.18(2)

Fig.18(3)

Fig.18(4)

EP 1 097 855 B1

EP 1 097 855 B1

Fig.19(1) δ

Fig.19(2) D

Fig.19(3) Gy

Fig.19(4) γ

42

Fig.20

EP 1 097 855 B1

Fig.21(1) $\delta$

16.7m/s

8.33m/s

50.0m/s

33.3m/s

( sec )

Fig.21(2) D

50.0m/s、33.3m/s、16.7m/s、8.33m/s

( sec )

Fig.21(3) Gy

8.33m/s

16.7m/s

50.0m/s 33.3m/s

( sec )

Fig.21(4) $\gamma$

50.0m/s

33.3m/s

8.33m/s

16.7m/s

0      0.2      0.4      0.6      0.8      1

( sec )

EP 1 097 855 B1

Fig.22(1) δ

16.7m/s

1

0.5

8.33m/s

50.0m/s

33.3m/s

0

(sec)

Fig.22(2) D

50.0m/s

1

0.5

8.33m/s

33.3m/s   16.7m/s

0

(sec)

Fig.22(3) Gy

1.5

16.7m/s   8.33m/s

1

0.5

33.3m/s   50.0m/s

0

(sec)

Fig.22(4) γ

50.0m/s

1

0.5

33.3m/s   16.7m/s   8.33m/s

0

0       0.2       0.4       0.6       0.8       1

(sec)

EP 1 097 855 B1

Fig.23(1) δ

16.7m/s

50.0m/s

33.3m/s

8.33m/s

(sec)

Fig.23(2) D

50.0m/s、33.3m/s、16.7m/s、8.33m/s

(sec)

Fig.23(3) Gy

8.33m/s

16.7m/s  33.3m/s  50.0m/s

(sec)

Fig.23(4) γ

50.0m/s

33.3m/s

8.33m/s

16.7m/s

(sec)

EP 1 097 855 B1

Fig.24

Fig.25(1) δ

33.3m/s

16.7m/s

8.33m/s

50.0m/s

(sec)

Fig.25(2) D

50.0m/s、33.3m/s、16.7m/s、8.33m/s

(sec)

Fig.25(3) Gy

33.3m/s

8.33m/s    16.7m/s

50.0m/s

(sec)

Fig.25(4) γ

50.0m/s

33.3m/s

16.7m/s

8.33m/s

(sec)

(sec)

EP 1 097 855 B1